(19) **Europäisches Patentamt**
**European Patent Office**
**Office européen des brevets**

(11) **EP 2 406 585 B1**

(12) **EUROPÄISCHE PATENTSCHRIFT**

(45) Veröffentlichungstag und Bekanntmachung des Hinweises auf die Patenterteilung:
**03.05.2023 Patentblatt 2023/18**

(21) Anmeldenummer: **10707055.9**

(22) Anmeldetag: **09.03.2010**

(51) Internationale Patentklassifikation (IPC):
**G01F 1/32** (2022.01)    **G01F 1/74** (2006.01)

(52) Gemeinsame Patentklassifikation (CPC):
**G01F 1/74; G01F 1/3209**

(86) Internationale Anmeldenummer:
**PCT/EP2010/052981**

(87) Internationale Veröffentlichungsnummer:
**WO 2010/103005 (16.09.2010 Gazette 2010/37)**

(54) **VERFAHREN UND WIRBELSTRÖMUNGSMESSGERÄT ZUM ÜBERWACHEN UND/ODER MESSEN EINER WANDSTRÖMUNG EINES IN EINER ROHRLEITUNG STRÖMENDEN, ZWEI- ODER MEHRPHASIGEN MEDIUMS**

METHOD AND VORTEX FLOW METER FOR MONITORING AND/OR MEASURING A WALL FLOW OF A BIPHASIC OR MULTIPHASE MEDIUM FLOWING IN A PIPE

PROCÉDÉ ET APPAREIL DE MESURE D'ÉCOULEMENT TOURBILLONNAIRE, DESTINÉS À SURVEILLER ET/OU MESURER UN ÉCOULEMENT PARIÉTAL D'UN FLUIDE TRAVERSANT UNE CONDUITE TUBULAIRE ET POSSÉDANT DEUX PHASES OU PLUS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.03.2009 DE 102009001525**

(43) Veröffentlichungstag der Anmeldung:
**18.01.2012 Patentblatt 2012/03**

(73) Patentinhaber: **Endress+Hauser Flowtec AG**
**4153 Reinach (CH)**

(72) Erfinder:
• **HÖCKER, Rainer**
**79761 Waldshut (DE)**
• **LIMACHER, Peter**
**CH-5023 Biberstein (CH)**
• **SÜTTERLIN, Dirk**
**79650 Schopfheim (DE)**
• **GOSSWEILER, Christoph**
**CH-8404 Winterthur (CH)**

(74) Vertreter: **Hahn, Christian et al**
**Endress+Hauser Group Services (Deutschland)AG +Co. KG**
**Colmarer Straße 6**
**79576 Weil am Rhein (DE)**

(56) Entgegenhaltungen:
**EP-A2- 0 229 933**    **EP-A2- 0 666 468**
**WO-A1-2009/003966**    **WO-A2-03/102511**
**US-A- 5 808 209**    **US-B1- 6 220 103**

• **ZHIQIANG SUN ET AL: "On measurement property of vortex flowmeter in bubbly two-phase flows" AIP CONFERENCE PROCEEDINGS AIP USA, Bd. 914, Nr. 1, 5. Juni 2007 (2007-06-05), Seiten 246-250, XP002597581 ISSN: 0094-243X**
• **KHAN H J ET AL: "STATISTICAL CHARACTERIZATION OF AIR WATER BUBBLY FLOW USING DIFFERENTIAL PRESSURE DROP MEASUREMENTS" ASME FLUIDS ENGINEERING DIVISION MEETING, XX, XX, Bd. 165, 20. Juni 1993 (1993-06-20), Seiten 137-144, XP009022351**
• **PUSAYATANONT M ET AL: "Two-phase flow measurement based on the analysis of the sensor signal from a conventional vortex flowmeter" FLOW MEASUREMENT. PROCEEDINGS OF FLOMEKO. IMEKO CONFERENCEON FLOW MEASUREMENT, XX, XX, 12. Mai 2003 (2003-05-12), Seiten 1-8, XP002264396**

- FOUSSAT A J M ET AL: "VERTICAL LIQUID-LIQUID AND LIQUID-GAS TWO-PHASE FLOW MEASUREMENTS WITH A VORTEX FLOWMETER" MEASURING TECHNIQUES IN GAS-LIQUID TWO-PHASE FLOWS, SYMPOSIUM, XX, XX, 1. Januar 1984 (1984-01-01), Seiten 651-676, XP001156346
- MENZ B: "Vortex flowmeter with enhanced accuracy and reliability by means of sensor fusion and self-validation" MEASUREMENT, INSTITUTE OF MEASUREMENT AND CONTROL. LONDON, GB LNKD- DOI:10.1016/S0263-2241(97)00075-4, Bd. 22, Nr. 3-4, 12. November 1997 (1997-11-12), Seiten 123-128, XP004123097 ISSN: 0263-2241
- HULIN J-P ET AL: "EXPERIMENTAL STUDY OF VORTEX EMISSION BEHIND BLUFF OBSTACLES IN A GAS LIQUID VERTICAL TWO-PHASE FLOW" INTERNATIONAL JOURNAL OF MULTIPHASE FLOW, ELSEVIER, AMSTERDAM, NL LNKD- DOI:10.1016/0301-9322(82)90019-2, Bd. 8, Nr. 5B, 1. Oktober 1982 (1982-10-01), Seiten 475-490, XP009022376 ISSN: 0301-9322
- SNOEK C W: "Selection of new developments in multiphase flow measurement techniques" EXPERIMENTAL THERMAL AND FLUID SCIENCE 1990 JAN, Bd. 3, Nr. 1, Januar 1990 (1990-01), Seiten 60-73, XP002597583 DOI: DOI:10.1016/0894-1777(90)90101-C
- AMADI-ECHENDU J E ET AL: "Analysis of signals from vortex flowmeters" FLOW MEASUREMENT AND INSTRUMENTATION UK, Bd. 4, Nr. 4, Oktober 1993 (1993-10), Seiten 225-231, XP002597584 ISSN: 0955-5986
- ZHIQIANG SUN: "Mass flow measurement of gas-liquid bubble flow with the combined use of a Venturi tube and a vortex flowmeter" MEASUREMENT SCIENCE & TECHNOLOGY IOP PUBLISHING LTD. UK, Bd. 21, Nr. 5, 055403, Mai 2010 (2010-05), Seiten 1-7, XP002597585 ISSN: 0957-0233
- COLLIS W B ET AL: "Higher-order spectra: the bispectrum and trispectrum" MECHANICAL SYSTEMS AND SIGNAL PROCESSING ACADEMIC PRESS UK, Bd. 12, Nr. 3, Mai 1998 (1998-05), Seiten 375-394, XP002597586 ISSN: 0888-3270

**Beschreibung**

Die vorliegende Erfindung betrifft ein Verfahren zum Überwachen und/oder Messen eines in einer Rohrleitung strömenden, zumindest zeitweise zweiphasigen Mediums, das eine, insbesondere gasförmige, erste Phase mit einer ersten Dichte und eine zweite, insbesondere flüssige, Phase mit einer zweiten Dichte, von der ersten Dichte verschieden, aufweist, mittels eines in das strömende Medium hineinragenden Staukörpers und eines, insb. stromab oder innerhalb des Staukörpers platzierten, Wirbelsensors, sowie ein entsprechend ausgebildetes Wirbelströmungsmessgerät.

Für die Durchflussmessung von Fluiden in Rohrleitungen, insbesondere von Gasströmungen oder Dampfströmungen im Hochtemperaturbereich, werden häufig Wirbelströmungsmessgeräte eingesetzt. Bei derartigen Wirbelströmungsmessgeräten wird ein Strömungshindernis derart in dem Strömungspfad angeordnet, dass das jeweilige Fluid beidseitig des Strömungshindernisses vorbeiströmen kann. Dabei lösen sich an dem Strömungshindernis zu beiden Seiten hin Wirbel ab. Über einen weiten Reynoldszahlbereich lösen sich die Wirbel dabei alternierend an den beiden Seiten des Strömungshindernisses ab, so dass eine gestaffelte Anordnung der Wirbel entsteht. Diese gestaffelte Anordnung der Wirbel wird als Kármán'sche Wirbelstraße bezeichnet. Bei Wirbelströmungsmessgeräten wird dabei das Prinzip ausgenutzt, dass eine Wirbelablösefrequenz - die sogenannte Vortexfrequenz -, mit der diese Wirbel gebildet werden, über einen weiten Reynoldszahlbereich proportional zur Strömungsgeschwindigkeit des jeweiligen Fluides ist. Dementsprechend kann aus der erfassten Wirbelablösefrequenz, die im Folgenden als Vortexfrequenz bezeichnet wird, und einen, für den jeweiligen Typ von Wirbelströmungsmessgerät charakteristischen Kalibrierfaktor die Strömungsgeschwindigkeit bestimmt werden.

Ein Wirbelströmungsmessgerät umfasst dabei in der Regel ein Messrohr, in dessen Strömungspfad ein Staukörper als Strömungshindernis angeordnet ist. Der Staukörper erstreckt sich dabei üblicherweise in diametraler Richtung vollständig oder über einen erheblichen Anteil des Innenquerschnittes des Messrohres derart, dass das jeweilige Fluid beidseitig des Staukörpers vorbeiströmen kann. An dem Staukörper sind dabei in der Regel an beiden Seiten wenigstens zwei Abrisskanten ausgebildet, die ein Ablösen von Wirbeln unterstützen. Im Einsatz wird das Messrohr in eine Rohrleitung, deren Fluidströmung gemessen werden soll, eingesetzt, so dass die Fluidströmung durch das Messrohr und zumindest teilweise gegen den Staukörper strömt.

Ferner weist das Wirbelströmungsmessgerät in der Regel mindestens einen Wirbelsensor auf, der auf von Wirbeln erzeugte Druckschwankungen anspricht. Dieser ist stromabwärts von den beiden Abrisskanten angeordnet. Der Wirbelsensor kann dabei innerhalb des Staukörpers oder stromabwärts von dem Staukörper, insbesondere als separates Bauteil, angeordnet sein. Die von dem Wirbelsensor erfassten Druckschwankungen werden in ein elektrisches Messsignal umgewandelt, dessen Frequenz direkt proportional zu der Strömungsgeschwindigkeit des Fluids ist. Wird zusätzlich die Dichte des Fluids ermittelt oder ist diese bekannt, so kann aus der Strömungsgeschwindigkeit und der Dichte der Massedurchfluss des Fluides berechnet werden.

Wirbelströmungsmessgeräte der oberhalb beschriebenen Art werden vor allem zur Messung von einphasigen Medien, insbesondere Fluiden (Flüssigkeiten, Gase), eingesetzt. In speziellen Anwendungen kann es aber auch dazu kommen, dass zwei oder mehrere Stoffe, insbesondere zwei oder mehrere Fluide unterschiedlicher Dichte und Zusammensetzung, bei der Durchflussmessung auftreten. Dabei kann es sich auch um den gleichen Stoff (z.B. Wasser) handeln, der gleichzeitig in zwei Phasen oder Aggregatzustände vorliegt.

Im Folgenden wird zur Vereinfachung von der ersten Phase und von der zweiten Phase eines in der Rohrleitung strömenden zwei- oder mehrphasigen Mediums gesprochen, wobei die erste und zweite Phase die beiden Hauptphasen mit den größten Massenstromanteilen repräsentieren. Weitere Phasen können insbesondere in einer oder auch in beiden Phasen insbesonder als Festkörperpartikel enthalten sein.

Die erste und die zweite Phase des strömenden, zwei- oder mehrphasigen Mediums können dabei jeweils unterschiedliche Aggregatszustände des gleichen Stoffes, wie es beispielsweise bei einem Wasser-Gerinne in Wasserdampf der Fall ist, oder auch zwei verschiedene Stoffe, wie beispielsweise in einer Flüssigkeit mitgeführter Sand, etc. sein. Insbesondere handelt es sich sowohl bei der ersten als auch bei der zweiten Phase jeweils um ein Fluid (Flüssigkeit, Gas). Die Wandströmung kann dabei wiederum auch aus mehr als nur einem Medium, insbesondere aus zwei verschiedenen Stoffen, gebildet werden. Auf diese Variante wird, auch bei den unterhalb erläuterten Weiterbildungen jeweils Bezug genommen, auch wenn nicht jedes Mal explizit (durch die Angabe von "mindestens einer zweiten Phase") darauf hingewiesen wird. Die Erfindung ist insbesondere bei solchen Mischungen aus zwei Phasen anwendbar, bei denen der Dichteunterschied zwischen den zwei Phasen derart hoch ist und sich die beiden Phasen nicht oder nur geringfügig mischen, so dass die zweite Phase bei der Strömung durch eine Rohrleitung zumindest teilweise als Wandströmung strömt, insbesondere entlang einem unteren Rohrwandabschnitt bei einer waagrecht oder schräg verlaufenden Rohrleitung. Insbesondere betrifft die Erfindung derartige Kombinationen, bei denen die zweite Phase ein Flüssigkeits-Gerinne und die erste Phase ein Gas ist.

Es ist bekannt, dass in Wirbelströmungsmessgeräten das Auftreten von zwei oder mehreren Medien zu Messfehlern der aus der Vortexfrequenz ermittelten Strömungsgeschwindigkeit führt.

Ein Beispiel für das Auftreten eines in einer Rohrleitung strömenden Mediums mit zwei unterschiedlichen Phasen ist die Bildung von Flüssigkeits-Gerinnen in Gasleitungen. Als Flüssigkeits-Gerinne oder allgemein Gerinne wird dabei eine Flüssigkeit bezeichnet, die als Wandströmung entlang einer Rohrwand der jeweiligen Rohrleitung strömt. Dieser Fall ist auch insbesondere bei Dampfleitungen (Wasserdampfleitungen), in denen sich als zweite Phase eine Wandströmung bestehende aus Wasser bilden kann, relevant. Neben Flüssigkeits-Gerinnen in Gasleitungen können aber auch in Flüssigkeitsströmungen strömungsfähige Festkörper, wie beispielsweise Sand, mitgefördert werden, so dass die Sandströmung (durchmischt mit Flüssigkeit) ähnlich wie bei den oberhalb erwähnten Flüssigkeits-Gerinnen entlang einer Rohrwand der jeweiligen Rohrleitung strömt. Ist die durchströmte Rohrleitung waagrecht oder schräg (in Bezug auf die Richtung der Schwerkraft) angeordnet und weist die Wandströmung (der zweiten Phase) eine höhere Dichte als die, in der Rohrleitung geführte erste Phase auf, so strömt die Wandströmung in der Regel entlang einem unteren Abschnitt der Rohrwand der Rohrleitung.

Dabei ist es für viele Anwendungen wünschenswert, zuverlässig und ohne wesentlich erhöhten Kostenaufwand das Auftreten einer zweiten Phase in einer Strömung einer ersten Phase zu detektieren und gegebenenfalls auch den Anteil der zweiten Phase, insbesondere deren Massedurchfluss, zu bestimmen. Dies ist insbesondere bei Anwendungen der Fall, in denen Wasserdampf über größere Strecken transportiert wird. Die Förderung von heißem Wasserdampf in Rohrleitungen wird in industriellen Anlagen insbesondere zur Bereitstellung von Energie genutzt, wobei hierzu eine hohe Dampfqualität, was einen niedrigen Anteil an flüssigem Wasser entspricht, erforderlich ist. Insbesondere besteht hierbei oftmals die Anforderung, dass die Dampfqualität über 95% liegt. Die Dampfqualität wird dabei als das Verhältnis des Massedurchflusses des Dampfanteils zu dem Gesamt-Massedurchfluss bestehend aus Dampf und kondensiertem Wasser angegeben. Auch in dem technischen Gebiet der Ölförderung wird heißer Dampf, der in Rohrleitungen gefördert wird, eingesetzt.

Grundsätzlich bestehen verschiedene Arten, wie die zweite Phase eines strömungsfähigen, zwei- oder mehrphasigen Mediums in einer Rohrleitung mitgeführt werden kann. Wie bereits erläutert wurde, kann die zweite Phase als Wandströmung, insbesondere als Gerinne, entlang einer Rohrwand der betreffenden Rohrleitung strömen. Ferner kann die zweite Phase auch relativ gleichmäßig in der ersten Phase als Tröpfchen oder Partikel verteilt in der Strömung mitgeführt werden. Diese beiden Strömungsarten der zweiten Phase können dabei, je nach Anwendung, auch gleichzeitig oder jeweils nur einzeln auftreten. Neben diesen zwei Strömungszuständen gibt es noch andere bekannte Zustände wie z.B. Schwall- oder Blasenfluss.

Wie nachfolgend noch detaillierter erläutert wird, behandelt die vorliegende Erfindung dabei vorwiegend das Problem einer zuverlässigen und zeitnahen Detektion einer Wandströmung einer zweiten, strömungsfähigen, entlang einer Rohrwand einer Rohrleitung strömenden Phase, insbesondere eines Gerinnes.

In der Druckschrift US 2006/0217899 A1 ist ein Verfahren zum Überwachen einer Fluidströmung in einer Rohrleitung mittels eines, in der Rohrleitung angeordneten Durchflussmessgerätes beschrieben. Dabei werden Signaleigenschaften, im Wesentlichen der RMS-Wert (Root-Mean-Square) über einen breitbandigen Frequenzbereich des Signals, analysiert, um allgemein das Auftreten einer Zwei-Phasen-Strömung zu detektieren. Hierbei wird nicht zwischen den verschiedenen Strömungsarten, insbesondere den beiden, oberhalb erläuterten Strömungsarten, unterschieden. Insbesondere wird in Der Druckschrift US 2006/0217899 A1 darauf hingewiesen, dass explizit die Fluktuationen, welche nicht im Nutzsignalfrequenzbereich liegen und herkömmlich für eine bessere Erfassung des Nutzsignals unterdrückt werden, zur Bestimmung der zweite Phase herangezogen werden. Insbesondere wird in der Druckschrift US 2006/0217899 A1 festgestellt, dass die Signalamplitude, berechnet als RMS-Wert des Signalspektrums über einen breitbandigen Bereich mit hochfrequenten Signalanteilen des Wirbelströmungsmessgerätes mit zunehmendem Durchfluss der zweiten Phase abnimmt. Dementsprechend wird vorgeschlagen, im Rahmen einer Kalibrierung die aus dem Spektrum ermittelten breitbandigen RMS-Werte, die erfasste Vortexfrequenz und die Durchflussrate der zweiten Phase zu korrelieren, um dann im Einsatz aus der gemessenen Signalamplitude und der erfassten Vortexfrequenz auf die Durchflussrate der zweiten Phase schließen zu können..

Ein Nachteil des in der Druckschrift US 2006/0217899 A1 beschriebenen Verfahrens besteht darin, dass gegebenenfalls vorhandene Störungen wie Sie typischerweise in Form von Vibrationen auftreten können, den breitbandigen RMS-Wert stark verfälschen können, und damit die sichere Detektion einer zweiten Phase nicht gewährleistet ist. WO 03/102511 offenbart ein Verfahren zum Überwachen und oder Messen eines in einer Rohrleitung strömenden, zumindest zeitweise zweiphasigen Mediums gemäß den Präambel des Anspruchs 1.

Die Aufgabe der vorliegenden Erfindung besteht darin, ein Verfahren sowie ein Wirbelströmungsmessgerät bereitzustellen, durch welche zuverlässig, zeitnah und ohne erheblichen Kostenaufwand ein in einer Rohrleitung strömendes, zumindest zeitweise zweiphasiges Medium, das eine, insbesondere gasförmige, erste Phase mit einer ersten Dichte und eine zweite, insbesondere flüssige, Phase mit einer zweiten Dichte, von der ersten Dichte verschieden, aufweist, zu überwachen, wobei die zweite Phase hauptsächlich in Form einer Wandströmung insbesondere in Form eines Gerinnes an der Rohrwand der Rohrleitung entlang strömt.

Die Aufgabe wird durch ein Verfahren gemäß Anspruch 1 sowie durch ein Wirbelströmungsmessgerät gemäß Anspruch 10 gelöst. Vorteilhafte Weiterbildungen der Erfindung sind in den Unteransprüchen angegeben.

Gemäß der vorliegenden Erfindung wird ein Verfahren zum Überwachen und/oder Messen eines in einer Rohrleitung strömenden, zumindest zeitweise zweiphasigen Mediums, das eine, insbesondere gasförmige, erste Phase mit einer ersten Dichte und eine zweite, insbesondere flüssige, Phase mit einer zweiten Dichte, von der ersten Dichte verschieden, aufweist, mittels eines in das strömende Medium hineinragenden Staukörpers und eines, insbesondere stromab oder innerhalb des Staukörpers platzierten, Wirbelsensors und ein an den Wirbelsensor angepasstes Wirbelstrommessgerät vorgestellt. Das Verfahren weist ferner nachfolgende Schritte auf:

a) Erzeugen von Kármán'schen Wirbeln im strömenden Medium zumindest im Bereich des Wirbelsensors mittels des Staukörpers, wobei die Wirbel mit einer von einer momentanen Strömungsgeschwindigkeit des strömenden Mediums abhängigen Wirbelablösefrequenz (Vortexfrequenz) vom Staukörper abgelöst werden;

b) Strömenlassen zumindest eines Teilvolumens der zweiten Phase des strömenden Mediums entlang einer Rohrwand im Bereich des Wirbelsensors;

c) Erfassen von durch die Kármán'schen Wirbel im strömenden Medium verursachten periodischen Druckschwankungen mittels des Wirbelsensors zum Erzeugen eines mit den Druckschwankungen korrespondierenden Sensorsignals;

d) Selektieren einer Nutzsignalkomponente aus dem Sensorsignal, die ein, insbesonders. schmales, die Wirbelablösefrequenz enthaltendes Frequenzband aufweist, insbesondere mit einer Relativen Bandbreite kleiner als 50% der momentanen Wirbelablösefrequenz, wobei die momentane Wirbelablösefrequenz der Mittenfrequenz; des Frequenzbandes entspricht und

e) Detektieren des Vorhandenseins der zweiten Phase des strömenden Mediums unter Verwendung der vom Sensorsignal selektierten Nutzsignalkomponente, insb. basierend auf einer Kurtosis der Nutz-Signalkomponente.

Demgemäß ermöglicht die vorliegende Erfindung, mit einem Wirbelströmungsmess-gerät, durch das im Einsatz aus der erfassten Vortexfrequenz der Wirbel die Strömungsgeschwindigkeit der ersten Phase eines strömungsfähigen, zwei- oder mehrphasigen Mediums, insbesondere eines Gases, bestimmt werden kann, gleichzeitig auch das Auftreten einer Wandströmung der zweiten Phase, entlang der Rohrwand des Messrohrs des strömenden zweiphasigen Mediums, insbesondere eines Gerinnes, zeitnah (d.h. online) zu detektieren. Für die Detektion einer Wandströmung der zweiten Phase ist dabei kein zusätzliches Gerät erforderlich. Dementsprechend können die Anzahl der Bauteile und damit die Kosten gering gehalten werden. Die Detektion eines Gerinnes gelingt insbesondere dadurch, dass der sensitive Abschnitt zumindest teilweise angrenzend an der Rohrwand des Messrohres angeordnet ist, so dass bei Vorbeiströmen einer Wandströmung des zweiten Mediums das zweite Medium mit dem sensitiven Abschnitt wechselwirken kann. Durch den sensitiven Abschnitt können dementsprechend zusätzlich zur charakteristischen Messgrösse (Vortexfrequenz) der Wirbel der ersten Phase des strömenden Mediums auch die charakteristischen Merkmale, der zweite Phase, bedingt durch die Wechselwirkung mit der Wandströmung, erfasst werden. Dies führt zu einem Messsignal, welches sowohl die Messgrösse der ersten Phase als auch die Messgrösse der zweiten Phase enthält. Anhand dieses Messsignals kann dann auf einfache Weise festgestellt werden, ob eine Wandströmung der zweiten Phase vorliegt. Dies kann, beispielsweise auch automatisiert durch das Wirbelströmungsmessgerät erfolgen und einem Benutzer vor Ort zur Anzeige gebracht werden oder auf eine andere Weise signalisiert werden, etwa in einer vom Meßgerät entfernten Leitwarte.

Das Wirbelströmungsmessgerät kann, abgesehen von den explizit hierin erwähnten Besonderheiten, grundsätzlich auf verschiedene Weisen, wie es insbesondere aus dem Stand der Technik bekannt ist, aufgebaut sein. Insbesondere kann der grundsätzliche Aufbau einem Wirbelströmungsmessgerät entsprechen, wie es im einleitenden Teil erläutert wurde. Wie oberhalb erläutert wird, ist dabei der sensitive Abschnitt des ersten Wirbelsensors zumindest teilweise angrenzend an der Rohrwand des Messrohres angeordnet. Unter einer "angrenzenden Anordnung" werden dabei Anordnungen umfasst, bei denen der sensitive Abschnitt direkt an der Rohrwand des Messrohres beginnt sowie Anordnungen, bei denen der sensitive Abschnitt sich so gering von der Rohrwand des Messrohres befindet, dass bei typischen, auftretenden Wandströmungen die Dicke der Wandströmung größer als der Abstand des sensitiven Abschnittes von der Rohrwand ist und damit eine Wechselwirkung der Wandströmung mit dem sensitiven Abschnitt auftreten kann. Ferner erstreckt sich der sensitive Abschnitt in Richtung zu dem Innenraum des Messrohres, so dass auch eine Wechselwirkung mit der Strömung der ersten Phase des strömenden, zwei- oder mehrphasigen Mediums auftritt. Insbesondere ist dabei vorgesehen, dass sich der sensitive Abschnitt parallel zu dem Staukörper erstreckt und bezüglich der Strömungsrichtung fluchtend zu dem Staukörper angeordnet ist.

Als Messsignal, das charakteristische Merkmale für eine Wechselwirkung einer Wandströmung des zweiten, entlang einer Rohrwand des Messrohres strömenden, zwei- oder mehrphasigen Mediums mit dem sensitiven Abschnitt des ersten Wirbelsensors enthält, wird insbesondere ein Messsignal verstanden, das gegenüber einem Messsignal bei einer reinen Strömung der ersten Phase eines strömenden, zwei- oder mehrphasigen Mediums charakteristische Abweichungen aufweist, wobei diese charakteristischen Abweichungen durch die Wechselwirkung der Wandströmung der zweiten Phase des strömenden, zwei- oder mehrphasigen Mediums mit dem sensitiven Abschnitt des ersten Wirbelsensors hervorgerufen werden. Die Wechselwirkung ist dabei aufgrund der Anordnung des sensitiven Abschnittes direkt, was bedeutet, dass die Wandströmung direkt an dem sensitiven Abschnitt (gegebenenfalls unter Berührung desselben) vorbeiströmt und damit Druckschwankungen, die über den sensitiven Abschnitt erfasst werden, auslöst.

Gemäß einer vorteilhaften Weiterbildung ist das Messrohr abgewinkelt zu einer vertikalen Richtung, insbesondere waagrecht, angeordnet und der sensitive Abschnitt des ersten Wirbelsensors ist in einer unteren Hälfte des Messrohres, insbesondere auf der am tiefsten gelegenen Mantellinie des Messrohres, angeordnet. Durch einen derartigen waagrechten oder schrägen Verlauf des Messrohres sammelt sich die Wandströmung der zweiten Phase aufgrund der Schwerkraft vorwiegend in einer unteren Hälfte des Messrohres an. Dementsprechend kann durch die gezielte Anordnung des sensitiven Abschnittes in einer unteren Hälfte des Messrohres, insbesondere auf der am tiefsten gelegenen Mantellinie des Messrohres, sichergestellt werden, dass die Wandströmung der zweiten Phase durch das Wirbelströmungsmessgerät detektiert werden kann. Das Messrohr kann dabei waagrecht, das heißt senkrecht zu der Richtung der Schwerkraft, oder im Wesentlichen senkrecht angeordnet sein, so dass sich die Schwerkraft nicht oder nicht merklich auf die Strömungsgeschwindigkeit der zweiten Phase auswirkt.

Gemäß einer vorteilhaften Weiterbildung wird der sensitive Abschnitt des ersten Wirbelsensors durch einen schwenkbaren Abschnitt gebildet, der durch auftretende Druckschwankungen, hervorgerufen durch die am Staukörper ablösenden Wirbel, in Schwenkbewegung versetzbar ist. Dabei werden bei dem Schritt des Erfassens Schwenkbewegungen des schwenkbaren Abschnittes in das elektrische Messsignal umgewandelt. Die Umwandlung erfolgt dabei derart, dass die zeitliche Entwicklung der Amplitude des elektrischen Messsignals den ausgeführten Schwenkbewegungen entspricht. Die Umwandlung der Schwenkbewegungen in ein elektrisches Messsignal kann dabei auf verschiedene Weise, insbesondere über eine kapazitive, piezoresistive, optische, eine Ultraschall-, eine Thermistor-, oder über eine mechanische Erfassung der jeweiligen Position des schwenkbaren Abschnittes sowie über eine Erfassung der jeweiligen Position des schwenkbaren Abschnittes über Druck- oder Dehnmessstreifen erfolgen.

Insbesondere kann die Erfassung der jeweiligen (zeitabhängigen) Position des schwenkbaren Abschnittes mit einem DSC-Sensor (DSC: Digital Switched Capacitor; deutsch: digital geschalteter Kondensator) erfolgen. Bei diesem Sensortyp werden die Schwenkbewegungen des schwenkbaren Abschnittes mittels zweier elektrisch geschalteter Kapazitäten in differentielle elektrische Ladungsänderungen umgewandelt und durch eine geeignete Messelektronik ausgewertet. Solche DSC-Sensoren werden in der EP 0 229 933 A1 beschrieben.

Wie oberhalb erläutert wird, kann der schwenkbare Abschnitt des Wirbelsensors, der insbesondere als schwenkbare Hülse ausgebildet sein kann, in dem Staukörper integriert sein. Insbesondere kann er in einer Sackbohrung des Staukörpers aufgenommen sein. Die Sackbohrung steht dabei über eine oder mehrere Durchgangsöffnungen mit der Strömung innerhalb des Messrohres in Verbindung, so dass der schwenkbare Abschnitt über diese Durchgangsöffnungen Druckschwankungen aufnehmen kann. Ferner weist der Wirbelsensor in der Regel einen, von den Druckschwankungen entkoppelten Abschnitt, der beispielsweise innerhalb des schwenkbaren Abschnittes, insbesondere innerhalb der schwenkbaren Hülse, angeordnet ist, auf. Der von den Druckschwankungen entkoppelte Abschnitt ist dabei in der Regel, abgesehen von Bewegungen aufgrund äußerer Störeinflüsse, ortsfest angeordnet. Dadurch können auf eine der oberhalb erläuterten Weisen die Abstandsänderungen zwischen dem schwenkbaren und dem entkoppelten Abschnitt erfasst und in ein elektrisches Messsignal umgewandelt werden. Gemäß der vorliegenden Erfindung sind dabei die Durchgangsöffnungen zumindest teilweise angrenzend an der Rohrwand des Messrohres angeordnet, so dass eine Wechselwirkung einer Wandströmung des zweiten, entlang der Rohrwand des Messrohres strömenden Mediums mit dem schwenkbaren Abschnitt des Wirbelsensors ermöglicht wird. Ist das Messrohr schräg oder waagrecht angeordnet, so sind die Durchgangsöffnungen zumindest teilweise in einer unteren Hälfte des Messrohres angeordnet.

Ferner kann der schwenkbare Abschnitt des Wirbelsensors durch ein separat ausgebildetes, stromabwärts vom Staukörper oder auch teilweise respektive komplett in den Staukörper durch Aussparung eingelassenes, angeordnetes, schwenkbares Paddel gebildet werden, das sich von einer Rohrwand des Messrohres in den Strömungspfad erstreckt. Das Paddel kann sich dabei im Wesentlichen radial (zu dem Messrohr) und parallel zu dem Staukörper erstrecken und bezüglich der Erstreckungsrichtung des Messrohres fluchtend zu dem Staukörper angeordnet sein. Wiederum weist der Wirbelsensor auch bei dieser Ausgestaltung in der Regel einen, von den Druckschwankungen entkoppelten Abschnitt auf. Der von den Druckschwankungen entkoppelte Abschnitt ist dabei in der Regel, abgesehen von Bewegungen aufgrund äußerer Störeinflüsse, ortsfest angeordnet. Dementsprechend können die Abstandsänderungen zwischen dem schwenkbaren und dem entkoppelten Abschnitt auf eine der oberhalb erläuterten Weisen erfasst und in ein elektrisches Messsignal umgewandelt werden.

Das zeitabhängige (elektrische) Messsignal $y(t)$ kann näherungsweise mit einem Frequenz/Amplitudenmodulationsignal mit überlagertem Rauschanteil beschrieben werden. Es setzt sich zusammen aus dem eigentlichen Vortexsignal, welches durch eine Sinusschwingung mit einer zeitabhängigen Amplitude A(t) und einer ebenfalls zeitabhängigen Phase O(t) beschrieben werden kann plus additiver Rauschanteile R(t) unterschiedlicher Herkunft und Charakteristik. So wird das Rauschen durch differentielle Druckschwankungen in der Strömung durch Strömungsrauschen verursacht. Die Rauschanteile können auch durch überlagerte Schwingungen aufgrund von Vibrationen oder aber durch den Sensor oder Aufbau des Messgerätes gegebene Resonanzsignale, welche mechanisch in den Sensor eingekoppelt werden, auftreten. Das Vortexsignal kann daher näherungsweise durch folgende Formeln (1) beschrieben werden:

$$y(t) = A(t) \cdot \sin\big(\Theta(t)\big) + R(t)$$
$$A(t) = A_0 + \Delta a$$
$$(1) \quad \Theta(t) = \omega_{mv}(t) \cdot t + \int_0^t m(t)dt$$
$$2 \cdot \pi \cdot f_{mv}(t) = \omega_{mv}(t) = \dot{\Theta}(t)$$

Die zeitabhängige Amplitude A(t) setzt sich aus einer mittleren Amplitude $A_0$ und einer additiven Amplitudenvariation $\Delta a$, welche eine angenommene Gauß'sche Verteilung mit Mittelwert 0 und Varianz $\sigma_A{}^2$ besitzt, zusammen.

Der Zusammenhang der veränderlichen Phase O(t) und der momentanen Vortexfrequenz $f_{mv}(t)$ ist gegeben durch die erste Ableitung der veränderlichen Phase O(t) bestehend aus der momentanen Vortex-Kreisfrequenz $\omega_{mv}(t)$ und dem additiven Phasenrauschen, welches durch das Integral einer Frequenzmodulation m(t) über die Zeit definiert ist. Die Frequenzmodulation wird als Gauß'sches Rauschen mit Mittelwert 0 und Varianz $\sigma_R{}^2$ angenommen.

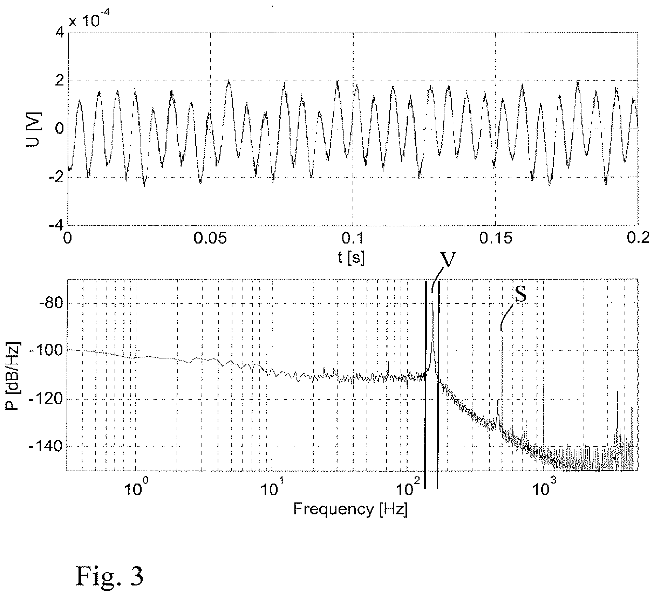

Ein typisches Messsignal und dessen Spektrum sind in Fig. 3 abgebildet.

Um nun das strömende Medium auf eine zweite Phase in Form eines Gerinnes oder Wandströmung hin zu überwachen und auch den Volumen- oder Masseanteil dieser zweiten Phase zu schätzen, kann das Messsignal y(t), wie unterhalb in Bezug auf eine Weiterbildung erläutert wird, zunächst mit einer kleinen Relativen Bandbreite mit der Vortexfrequenz als Mittenfrequenz gefiltert werden. Das gefilterte reelle Signal s(t) oder aber auch im speziellen die Amplitude $A_s$(t) des gefilterten reellen Signals s(t) enthält nun die nötige Information welche eine Aussage über das Vorhandensein einer zweiten Phase und deren Massenanteil zulässt. Die Fluktuationen der Amplitude des schmalbandig gefilterten Signals können nun statistisch, beispielsweise über die Standardabweichung der Amplitude $A_s$(t) oder aber auch über die Kurtosis des schmalbandig gefilterten Signals s(t), erfasst und ausgedrückt werden und stellen ein direktes Maß dar, welches für die Detektion eines Vorhandenseins und/oder das Messen des Masse- oder Volumenanteils einer zweiten Phase herangezogen werden kann.

Eine mögliche ausgebildete Variante der oben beschriebenen selektiven Filterung und Signalverarbeitung wird hier genannt. Die Amplitude $A_s$(t) kann insbesondere über das analytische Signal des gefilterten Messsignals s(t) gewonnen werden. Hierzu wird das gefilterte Messsignal mittels Hilbert-Transformation in ein gefiltertes analytische Signal $s_a$(t) überführt:

$$(2) \quad s_a(t) = I(t) + j \cdot Q(t) = \big|A_s(t)\big| \cdot e^{j\Phi(t)}$$

Das gefilterte analytische Signal $s_a$(t) setzt sich aus dem realen Anteil I(t) (In-Phase-Signal), welcher dem gefilterten reellen Signal s(t) entspricht, und dem komplexen Anteil Q(t) (Quadratur-Signal) zusammen; $j$ ist der komplexe Operator $\sqrt{(-1)}$ (Squareroot).

Eine momentane Betragsamplitude $|A_s(t)|$ zum Zeitpunkt $t=t_i$ kann dann wie in (3) berechnet werden:

$$(3) \quad \big|A_s(t)\big| = \sqrt{I(t)^2 + Q(t)^2}$$

Des Weiteren kann aus dem analytischen Signal über das Differenzieren der Phase $\phi$(t) nach der Zeit die momentane Vortexfrequenz berechnet werden:

$$(4) \quad \Phi(t) = \arctan\left(\frac{Q(t)}{I(t)}\right)$$
$$f_v = \frac{1}{2\pi} \cdot \frac{d\Phi(t)}{dt}$$

Aufgrund der Wechselwirkung einer Wandströmung der zweiten, entlang einer Rohrwand des Messrohres strömenden Phase mit dem sensitiven Abschnitt des ersten Wirbelsensors ist eine erhöhte Fluktuation der Amplitude des schmalbandig gefilterten analytischen Signals $s_a$(t) über die Zeit messbar. Die Wechselwirkung führt also zu einer erhöhten Amplitudenmodulation des erfassten schmalbandig gefilterten Messsignals. Diese Fluktuationen werden gemäß mehrerer Weiterbildungen der Erfindung statistisch ausgewertet und als Maß dafür herangezogen, ob und gegebenenfalls wie viel Masse-/Volumendurchfluss einer Wandströmung in Form der zweiten Phase auftritt. Dementsprechend kann durch Bestimmung der Fluktuationen der Betragsamplitude $|A_s(t)|$ des schmalbandig gefilterten analytischen Signals $s_a$(t) über die Zeit auf einfache Weise eine Wandströmung der zweiten Phase detektiert und gemessen werden. Die Fluktuationen des Betragsamplitude $|A_s(t)|$ können beispielsweise innerhalb des Wirbelströmungsmessgerätes automatisch, insbesondere durch eine entsprechend ausgebildete Elektronik, ausgewertet und überwacht werden. Mit "Elektronik" wird in dem Zusammenhang der vorliegenden Anmeldung sowohl auf eine elektronische Schaltung, durch welche Signale, insbesondere elektrische Signale, analog verarbeitet werden, als auch auf eine digital arbeitende Schaltung oder einen Prozessor, durch welche elektrische Signale digital verarbeitet werden, Bezug genommen. Insbesondere können diese beiden Formen auch gemischt auftreten.

Es ist bekannt, dass auch andere Ausbildungen zur Amplitudenmessung und zur statistischen Auswertung der Fluktuationen herangezogen werden können. So können beispielsweise auch ein Gleichrichter und ein nachgeschaltetes Tiefpassfilter eine mittlere Amplitude und deren Schwankung detektieren. Es ist auch bekannt, dass die Auswertung der Amplitudenfluktuationen über andere Wege erfolgen kann.

Wie schon in einem der vorgehenden Abschnitte erwähnt kann, neben anderen statistischen Auswertemöglichkeiten, insbesondere die Standardabweichung der Betragsamplitude $|A_s(t)|$ herangezogen werden. Es hat sich gezeigt, dass je höher die geschätzte Standardabweichung der Betragsamplitude ist, desto höher ist der Anteil der in Form einer Wandströmung auftretenden zweiten Phase.

Ferner kann als Maß für den Masse-/Volumenanteil der zweiten Phase auch die Kurtosis des gefilterten Realteils des analytischen Signals $s_a(t)$, kurz $\text{Re}\{s_a(t)\}$, welcher s(t) entspricht, herangezogen werden. Denn je höher die Kurtosis von $\text{Re}\{s_a(t)\}$ ist, desto größer sind die Abweichungen von einer reinen Sinusschwingung, welche einen Wert der Kurtosis von 1,5 aufweist.

Sowohl bei der Bestimmung der Standardabweichung der Betragsamplitude des analytischen Signals als auch bei der Bestimmung der Kurtosis des schmalbandig gefilterten Messsignals s(t) wird ermöglicht, dass im Voraus (für eine bestimmte Kombination einer ersten und einer zweiten Phase eines zwei- oder mehrphasigen strömenden Mediums) Grenzwerte für die Standardabweichung bzw. für die Kurtosis festgelegt werden können, bei deren Überschreiten eine zweite Phase vorliegt und dementsprechend festgestellt werden kann. Ferner kann zusätzlich oder alternativ ein weiterer Grenzwert festgelegt werden, bei dessen Überschreiten ein bestimmter Massedurchfluss der zweiten Phase überschritten und dementsprechend eine Warnmeldung ausgegeben wird.

Die Standardabweichung $\sigma_A$ der Betragsamplitude $A_s(t)$ kann aufgrund nachfolgender Gleichung berechnet werden.

$$(5) \quad \sigma_A = \sqrt{\frac{1}{N} \sum_{t_i=t_1}^{t_i=t_N} \left( \left| A_s(t_i) \right| - \overline{A}_s \right)^2}$$

Insgesamt werden N Werte in die Berechnung miteinbezogen.

$\overline{A}_s$ ist das arithmetische Mittel der Betragsamplitude gemessen über N Werte:

Die Kurtosis $\beta$ (bzw. das normierte vierte Moment) des schmalbandig gefilterten Messsignals s(t) kann durch die nachfolgend angegebene Gleichung (6) aus dem vierten Moment $\mu_4$ und der Standardabweichung $\sigma_s$ berechnet werden. Die Standardabweichung $\sigma_s$ kann dabei, wie unter Gleichung (7) angegeben ist, und das vierte zentrale Moment $\mu_4$ kann, wie es unter Gleichung (8) angegeben ist, erhalten werden.

$$(6) \quad \beta = \frac{\mu_4}{\sigma_s^4}$$

$$(7) \quad \sigma_s = \sqrt{\frac{1}{N} \sum_{t_i=t_1}^{t_i=t_N} (s(t_i) - \overline{s})^2}$$

$$(8) \quad \mu_4 = \frac{1}{N} \sum_{t_i=t_1}^{t_i=t_N} (s(t_i) - \overline{s})^4$$

$t_i$ beschreibt einen diskreten Zeitpunkt der Messung Insgesamt werden N Werte in die Berechnung miteinbezogen, wobei $s(t_i)$ der Wert des schmalbandig gefilterten Messsignals zu Messzeitpunkt $t_i$ und $\overline{s}$ das arithmetische Mittel der N Werte des schmalbandig gefilterten Messsignals ist.

Die Kurtosis $\beta$, bzw. das vierte Moment, ist dabei ein Maß für die Wölbung einer statistischen Verteilung (um deren Mittelwert). Neben dem vierten Moment gibt es bekannterweise auch das erste Moment, das dem Erwartungswert einer Zufallsvariablen, also dem Mittelwert, entspricht das zweite Moment, welches der Varianz entspricht und das dritte Moment, das nach Normierung auch als Schiefe bezeichnet wird. Schiefe und Wölbung werden oft als Maß der Abweichung von der Normalverteilung benutzt.

Während die Gleichungen (5), (7) und (8) jeweils für N diskrete Werte gelten, ist eine entsprechende Darstellung auch in Integralform für einen kontinuierlich erfassten Verlauf der jeweiligen Signale möglich. Die Bestimmung der Standardabweichung und/oder der Kurtosis durch eine entsprechend ausgebildete Elektronik innerhalb des Wirbelströmungsmessgerätes kann dabei derart erfolgen, dass die jeweils ermittelten Betragsamplituden $|A_s(t)|$ bzw. die Messwerte s(t) zu den diskreten Zeitpunkten $t=t_i$, mit i als fortlaufende ganze Zahl in einem Puffer- oder Ringspeicher gespeichert werden. Die Speicherung kann dabei derart erfolgen, dass eine vorbestimmte Anzahl von Werten in dem Pufferspeicher speicherbar ist, und dass bei Hinzufügen eines neuen Wertes $|A_s(t_i)|$ bzw. $s(t_i)$ der älteste Wert aus dem Pufferspeicher gelöscht wird, so dass die einzelnen Werte durch die verschiedenen Positionen des Pufferspeichers "geschoben" werden. Die N Werte, die für die Berechnung der Standardabweichung bzw. der Kurtosis herangezogen werden, können dabei durch ein entsprechendes Auswahlfenster von N Werten, wie beispielsweise von 100 Werten, ausgewählt werden. Die Berechnung der Standardabweichung bzw. der Kurtosis kann beispielsweise innerhalb vorbestimmter Zeitabstände jedes Mal dann erfolgen, wenn innerhalb des Auswahlfensters ein (oder auch mehrere) Wert(e) hinzugekommen (und eine entsprechende Anzahl alter Werte herausgefallen ist) sind oder auch erst, wenn sämtliche Werte innerhalb des Auswahlfensters durch neue Werte ersetzt wurden.

Gemäß der schon in einem der oberen Abschnitte beschriebenen vorteilhaften Weiterbildung wird für die Beurteilung, ob das Messsignal charakteristische Merkmale für eine Wechselwirkung einer zweiten Phase in Form einer Wandströmung entlang einer Rohrwand des Messrohres mit dem sensitiven Abschnitt des ersten Wirbelsensors enthält, das Messsignal schmalbandig mit einer kleinen Relativen Bandbreite mit der Vortexfrequenz als Mittenfrequenz selektiv gefiltert Durch eine derartige selektive Filterung werden nur die Frequenzbereiche im Bereich um die Vortexfrequenz herum berücksichtigt und Störanteile mit Frequenzen, die sich von der Vortexfrequenz unterscheiden, herausgefiltert. Insbesondere weist dieser Frequenzbereich eine Breite von kleiner als 50% der Vortexfrequenz mit der Vortexfrequenz als Mittenfrequenz auf.

Erfindungsgemäß wird unter Heranziehung einer Korrelation, die im Voraus im Rahmen einer Kalibrierung (für die jeweilige erste und zweite Phase eines Mediums) erstellt wurde, aus einer, durch das Wirbelströmungsmessgerät aus dem Messsignal bestimmten Vortexfrequenz und einer durch das Wirbelströmungsmessgerät aus dem Messsignal bestimmten Kurtosis ein Massedurchfluss der vorbestimmten, zweiten Phase bestimmt. Bei der Erstellung der Korrelation werden hierbei (im Voraus) im Rahmen einer Kalibrierung jeweils bekannte Massedurchflüsse einer Wandströmung einer vorbestimmten, zweiten Phase, Vortexfrequenzen, die für verschiedene Strömungsgeschwindigkeiten der ersten Phase durch das Wirbelströmungsmess-gerät aus dem Messsignal bestimmt wurden, sowie jeweils die zugehörigen, durch das Wirbelströmungsmessgerät aus dem Messsignal bestimmten Kurtosis zueinander in Beziehung gesetzt. Dies bedeutet, dass im Rahmen der Kalibrierung sowohl verschiedene (bekannte) Massedurchflüsse der zweiten Phase und verschiedene Strömungsgeschwindigkeiten der ersten Phase eingestellt werden und für diese verschiedenen Werte jeweils die zugehörige Vortexfrequenz und Kurtosis durch das Wirbelströmungsmessgerät bestimmt werden. Anhand der Korrelation kann dann im Einsatz des Wirbelströmungsmessgerätes anhand der, aus dem Messsignal bestimmten Kurtosis sowie aus der Vortexfrequenz unter Heranziehung der Korrelation auf einfache Weise quantitativ der Massedurchfluss der Wandströmung der zweiten Phase bestimmt werden. Eine derartige quantitative Bestimmung des Massedurchflusses der Wandströmung der zweiten Phase ist insbesondere bei waagrecht oder, falls eine waagrechte Anordnung nicht möglich ist, leicht schräg angeordnetem Messrohr vorteilhaft. Gemäß einer vorteilhaften Weiterbildung ist die Korrelation, insbesondere in Form einer Fit-Funktion, in dem Wirbelströmungsmessgerät hinterlegt.

Gemäß einer vorteilhaften Weiterbildung wird der bestimmte Masse-/Volumen-Durchfluss des zweiten Mediums zur Korrektur einer Strömungsgeschwindigkeit oder eines Volumendurchflusses der ersten Phase, die/der aus einer, durch das Wirbelströmungsmessgerät (aus dem Messsignal) bestimmten Vortexfrequenz bestimmt wird, herangezogen. Dadurch, dass die Wandströmung der zweiten Phase innerhalb des Messrohres ebenfalls ein Volumen einnimmt, weicht/weichen in der Regel die tatsächliche Strömungsgeschwindigkeit und/oder der tatsächliche Volumendurchfluss der ersten Phase von der/dem, aus der Vortexfrequenz bestimmten Strömungsgeschwindigkeit bzw. Volumendurchfluss ab. Anhand des bestimmten Massedurchflusses der Wandströmung der zweiten Phase kann insbesondere dessen Volumen abgeschätzt werden und dementsprechend beispielsweise der Volumendurchfluss der ersten Phase korrigiert werden.

Eine mögliche Realisierung zur Erfassung von Vortexfrequenz und neben vielen anderen wird gemäß einer vorteilhaften Weiterbildung in dieser Patentschrift genannt:. Das erfasste breitbandige Messsignal wird durch zwei parallele Filter auf einen schmalbandigen Frequenzbereich um die Vortexfrequenz herum gefiltert und gleichzeitig in ein analytisches Signal bestehend aus Realteil I(t)- und Imaginärteil Q(t) gewandelt.

Die beiden Filter weisen dabei den exakt gleiche Frequenzgang auf besitzen jedoch einen Phasenunterschied von 90°. Der Phasenunterschied von Q(t) zu I(t) von 90° ergibt sich allein durch die Koeffizienten des Quadratur-Filters welches das reelle breitbandige Messsignal in Q(t) filtert. gleichzeitig filtert das In-Phase-Filter das reelle breitbandige Messsignal in I(t) ohne Phasenverschiebung.

Durch eine derartige Filteranordnung kann in vorteilhafter Weise sowohl eine Filterung auf einen gewünschten Frequenzbereich durchgeführt werden sowie der reale Anteil (durch den Filter, der in Phase ist) als auch der komplexe Anteil (durch den Quadratur-Filter) des analytischen Signals des erfassten Messsignals erhalten werden. Wird beispielsweise das Messsignal, das den realen Anteil I(t) des analytischen Signals bildet, als $S(t)*\sin(\omega_V t)$ beschrieben, wobei $\omega_V$ die Vortexfrequenz ist, so ist das Signal, das von dem Filter in Phase geliefert wird, $I(t)=S(t)*\sin(\omega_V t)$, während das Signal, das von dem Quadratur-Filter geliefert wird, $Q(t)=S(t)*\cos(\omega_V t)$ ist.

Ferner können die beiden Filter derart ausgebildet sein, dass sie die gleiche Gruppenlaufzeit aufweisen. Dadurch kann sichergestellt werden, dass der reale Anteil I(t) sowie der zugehörige komplexe Anteil Q(t) zeitgleich durch die beiden Filter mit 90° Phasendifferenz ausgegeben werden.

Ferner kann in einer technischen Implementierung der Signalverarbeitung vorgesehen sein, dass die momentane Betragsamplitude $A_s(t)$ aus dem realen Anteil I(t) und dem komplexen Anteil Q(t) mittels eines CORDIC-Algorithmus (COordinate Rotation Digital Computer) gebildet wird. Über den CORDIC-Algorithmus kann gleichzeitig auch die momentane Phase $\Phi(t)$ des analytischen Signals, die dem arctan(Q(t)/I(t)) entspricht, erhalten werden. Durch Differenzieren der Phase $\Phi(t)$ nach der Zeit kann ferner die Vortexfrequenz erhalten werden.

Die bevorzugte Realisierung kann schaltungstechnisch rein analog oder rein digital oder zum Teil analog und digital umgesetzt werden, um eine momentane Phasen- und eine momentane Amplitudeninformation zu erhalten, welche zu einer statistischen Auswertung gemäß (5) oder/und (6) herangezogen wird, um eine Aussage über das Vorhandensein und/oder den Massenfluss-/Volumenflussanteil der zweiten Phase eines in einer Rohrleitung strömenden Mediums zu treffen.

Gemäß einer vorteilhaften Weiterbildung ist ein zweiter Wirbelsensor vorgesehen, der stromabwärts von den Abrisskanten des Staukörpers angeordnet ist und der einen, auf auftretende Druckschwankungen ansprechenden, sensitiven Abschnitt aufweist, und der in einer oberen Hälfte des waagrecht oder schräg angeordneten Messrohres angeordnet ist. Über diesen zweiten Wirbelsensor werden Druckschwankungen erfasst, die durch die Wirbel (hauptsächlich der ersten Phase) erzeugt werden, wobei die, über den sensitiven Abschnitt des zweiten Wirbelsensors erfassten Druckschwankungen in ein elektrisches Messsignal umgewandelt werden, das als Referenzsignal für eine reine Strömung der ersten Phase verwendet wird. Diese Weiterbildung ist insbesondere dann vorteilhaft, wenn der sensitive Abschnitt des ersten Wirbelsensors in einer unteren Hälfte des Messrohres, insbesondere auf der am tiefsten gelegenen Mantellinie des Messrohres, angeordnet ist. Durch die Bereitstellung eines derartigen Referenzsignals kann das elektrische Messsignal des ersten Wirbelsensors (oder auch daraus abgeleiteter Größen, wie einer Kurtosis) auf einfache Weise mit dem Referenzsignal (bzw. gegebenenfalls daraus abgeleiteten Größen, wie einer Kurtosis) verglichen werden. Bei dieser Weiterbildung kann aufgrund des Vergleiches auch ohne eine vorher durchgeführte Kalibrierung eine Wandströmung einer zweiten Phase, das (aufgrund der Schwerkraft) in der unteren Hälfte des Messrohres strömt und mit dem sensitiven Abschnitt des ersten Wirbelsensors wechselwirkt, detektiert werden. Gegebenenfalls kann dann eine Warnung durch das Wirbelströmungsmessgerät ausgegeben werden.

Bei dem zweiten Wirbelsensor sind, abgesehen von den Besonderheiten der Anordnung, im Wesentlichen die gleichen Weiterbildungen und Varianten, wie sie in Bezug auf den ersten Wirbelsensor erläutert wurden, möglich.

Gemäß einer vorteilhaften Weiterbildung weist der erste Wirbelsensor ein schwenkbares Paddel auf, das sich durch eine Öffnung, die stromabwärts von dem Staukörper in einem unteren Abschnitt, insbesondere an der am tiefsten gelegenen Mantellinie, des Messrohres ausgebildet ist, in den Strömungspfad erstreckt. Dementsprechend weist der Wirbelsensor einen sensitiven Abschnitt auf, der angrenzend an der Rohrwand und (zumindest teilweise) in der unteren Rohrhälfte angeordnet ist. Der Einsatz eines Paddels als sensitiver Abschnitt ist deshalb vorteilhaft, da bei Auftreten einer Wandströmung einer zweiten Phase in der Regel Wellen der zweiten Phase gegen das Paddel schlagen und damit eine erhöhte Fluktuation der momentanen Betragsamplitude eines schmalbandig gefilterten analytischen Signals des erfassten Messsignals über die Zeit verursachen.

Gemäß einer weiteren Ausgestaltung der Erfindung ist umliegend um das Paddel eine Vertiefung zur Aufnahme eines Teils der zweiten Phase, welche als Wandströmung vorbeiströmt, ausgebildet. Durch die Vertiefung und die dadurch bedingte Ansammlung der zweiten Phase, falls sie als Wandströmung im Bereich des Paddels vorbeiströmt, wird die Wechselwirkung zwischen der zweiten Phase und dem Paddel erhöht. Die Vertiefung kann dabei derart ausgebildet sein, dass die, in der Vertiefung verbleibende zweite Phase (insbesondere das Gerinne) dann, wenn die Wandströmung unterbrochen wird, von der vorbeiströmenden ersten Phase mitgenommen (bzw. ausgeblasen) wird und damit die Vertiefung wieder entleert wird. Dadurch wird gewährleistet, dass zu Zeiten, in denen keine Wandströmung auftritt, das Messsignal nicht durch einen, in der Vertiefung verbleibenden Rest der zweiten Phase verfälscht wird.

Wie im einleitenden Teil erläutert wird, kann neben einer Wandströmung der zweiten Phase zusätzlich oder alternativ auch eine Teilchen- und/oder Tröpfchen-Strömung des mindestens einer zweiten Phase (d.h. der gleichen Phase wie bei der Wandströmung) oder auch mindestens einer dritten Phase (d.h. eines anderen Mediums wie bei der Wandströmung) in der Rohrleitung und damit in dem Messrohr auftreten. Dabei ist wünschenswert, dass auch solch eine Teilchen- und/oder Tröpfchen-Strömung der zweiten bzw. dritten Phase durch das Wirbelströmungsmess-gerät detektiert und gegebenenfalls quantitativ bestimmt werden kann. Dementsprechend ist gemäß einer vorteilhaften Weiterbildung vorgesehen, dass das Verfahren zur Detektion einer verteilten Teilchen- und/oder Tröpfchen-Strömung des mindestens einer zweiten oder mindestens einer dritten Phase nachfolgende Schritte aufweist:

a) Erfassen von akustischen Signalen, welche durch den Aufprall von Teilchen und/oder Tröpfchen der zweiten bzw. dritten Phase auf ein Bauteil des Wirbelströmungsmessgerätes, das in einen Strömungspfad innerhalb des Messrohres ragt, insbesondere auf den Staukörper, erzeugt werden, durch einen akustischen Wandler, der integral in dem Bauteil ausgebildet ist oder akustisch an das Bauteil angekoppelt ist; und

b) Umwandeln der, durch den akustischen Wandler erfassten akustischen Signale durch den akustischen Wandler in elektrische Signale.

Durch die Weiterbildung wird ermöglicht, dass mit dem Wirbelströmungsmessgerät gleichzeitig auch das Auftreten einer verteilten Teilchen- und/oder Tröpfchen-Strömung des mindestens einer, zweiten bzw. dritten Phase zeitnah (d.h. online) detektiert werden kann. Hierfür ist kein zusätzliches Gerät erforderlich, so dass die Anzahl der Bauteile und damit die Kosten gering gehalten werden können. Die Detektion einer verteilten Teilchen- und/oder Tröpfchen-Strömung gelingt dabei dadurch, dass ein (vorhandenes) Bauteil des Wirbelströmungsmessgerätes, das in einen Strömungspfad innerhalb des Messrohres ragt, gleichzeitig als Prallfläche für einen Teil der Teilchen- und/oder Tröpfchen-Strömung innerhalb der ersten Phase genutzt wird. Die dabei, durch den Aufprall von Teilchen und/oder Tröpfchen der zweiten bzw. dritten Phase auf das Bauteil erzeugten akustischen Signale sind dann durch den akustischen Wandler in elektrische Signale wandelbar, so dass diese elektrisch durch das Wirbelströmungsmessgerät (insbesondere durch eine entsprechend ausgebildete Elektronik des Wirbelströmungsmessgerätes) verarbeitbar bzw. auswertbar sind. Ferner kann vorgesehen sein, dass bei einer Detektion einer Teilchen- und/oder Tröpfchen-Strömung und/oder einer erhöhten Teilchen- und/oder Tröpfchen-Strömung der zweiten bzw. dritten Phase durch das Wirbelströmungsmessgerät eine Warnmeldung ausgegeben wird.

Die Teilchen- und/oder Tröpfchen-Strömung kann dabei auch aus mehr als nur einem Medium, insbesondere aus Teilchen von mindestens zwei verschiedenen Stoffen, gebildet werden. Auf diese Variante wird auch bei den unterhalb erläuterten Weiterbildungen jeweils Bezug genommen, auch wenn nicht jedes Mal explizit (durch die Angabe von "mindestens einem zweiten bzw. dritten Medium") darauf hingewiesen wird. Mit "verteilter Teilchen- und/oder Tröpfchen-Strömung" wird dabei allgemein auf eine Strömung Bezug genommen, bei der die Teilchen und/oder Tröpfchen in der ersten Phase als mindestens eine, zweite bzw. dritte Phase (zumindest teilweise) verteilt sind und von dieser mitgeführt wird.

Als "akustischer Wandler" wird ein Wandler, Sensor bzw. Transducer bezeichnet, der die ankommenden akustischen Signale erfasst und in elektrische Signale, die den jeweiligen akustischen Signalen entsprechen, umwandelt. Der akustische Wandler kann als eine Variante beispielsweise integral in dem Bauteil direkt an dem Ort bzw. der Fläche des Bauteils, auf welchen/welche die Teilchen und/oder Tröpfchen der zweiten Phase aufprallen, ausgebildet sein und die erzeugten akustischen Signale direkt erfassen. Alternativ kann er auch mit Abstand von diesem Ort bzw. der Fläche des Bauteils, beispielsweise integral in dem Bauteil oder auch separat von dem Bauteil, angeordnet sein und akustisch derart an das Bauteil angekoppelt sein, dass sich die jeweiligen akustischen Signale (Schallwellen) von dem Ort bzw. der Fläche des Bauteils zu dem akustischen Wandler ausbreiten können. Insbesondere kann der akustische Wandler auch außerhalb des Messrohres angeordnet sein.

Gemäß einer vorteilhaften Weiterbildung wird das Bauteil durch den Staukörper des Wirbelströmungsmessgerätes gebildet und der Staukörper weist eine, im Wesentlichen senkrecht zu der Strömungsrichtung ausgerichtete Prallfläche auf, die der Strömung zugewandt ist. Auf diese Weise wird die Prallfläche direkt von der Teilchen- und/oder Tröpfchen-Strömung angeströmt und das Verhältnis der Größe der Prallfläche zu der Gesamtfläche des Innenquerschnitts des Messrohres kann einfach bestimmt werden. Ferner treffen die Teilchen und/oder Tröpfchen über die Prallfläche im Wesentlichen unter einem einheitlichen Winkel auf. Ein weiterer Vorteil bei der Verwendung des Staukörpers ist, dass die ankommende Strömung aufgrund der wechselseitigen Wirbelablösung am Staukörper bereits im Bereich vor dem Staukörper beeinflusst wird. Dies führt dazu, dass die Prallfläche des Staukörpers nicht genau senkrecht sondern wechselseitig (entsprechend der Frequenz der Wirbelablösung) leicht schräg angeströmt wird. Dadurch wird effektiv verhindert, dass sich Teilchen und/oder Tröpfchen auf der Prallfläche des Staukörpers ansammeln.

Grundsätzlich kann die Umwandlung der akustischen Signale in elektrische Signale durch den akustischen Wandler auf verschiedene Weise erfolgen. Gemäß einer vorteilhaften Weiterbildung wird der akustische Wandler durch einen piezoelektrischen oder durch einen kapazitiven Wandler gebildet. Gemäß einer weiteren vorteilhaften Weiterbildung ist der akustische Wandler außerhalb des Messrohres angeordnet und ist akustisch an das Bauteil des Wirbelströmungsmessgerätes, insbesondere an den Staukörper, angekoppelt. Auf diese Weise ist der akustische Wandler weitgehend entkoppelt von der Prozesstemperatur und dem Prozessdruck.

Gemäß einer vorteilhaften Weiterbildung ist eine Elektronik des Wirbelströmungsmessgerätes derart ausgebildet, dass durch diese die von dem akustischen Wandler bereitgestellten, elektrischen Signale nach vorbestimmten Kriterien ausgewertet werden. Diese Elektronik kann dabei in eine (bereits vorhandene) Elektronik des Wirbelströmungsmessgerätes, durch welche ein Messsignal des ersten Wirbelsensors ausgewertet wird, integriert werden. Durch das Wirbelströmungsmessgerät können ferner entsprechende Mitteilungen (wie beispielsweise Warnmeldungen, quantitative Bestimmungen der Teilchen- und/oder Tröpfchen-Strömung, etc.) ausgegeben, insbesondere auf einer Anzeige angezeigt werden.

Gemäß einer vorteilhaften Weiterbildung ist eine Elektronik des Wirbelströmungsmessgerätes derart ausgebildet, dass durch diese die von dem akustischen Wandler bereitgestellten elektrischen Signale auf eine auszuwertende Bandbreite gefiltert werden. Daneben können noch weitere Signalverarbeitungen, wie beispielsweise vor oder auch nach der Filterung eine Verstärkung des jeweiligen elektrischen Signals, durchgeführt werden. Ferner ist gemäß einer vorteilhaften Weiterbildung eine Elektronik des Wirbelströmungsmessgerätes derart ausgebildet, dass durch diese aus den von dem akustischen Wandler bereitgestellten, elektrischen Signalen durch eine spektrale Signalverarbeitung und/oder durch eine statistische Auswertung eine Messgröße bestimmt wird, die dann nach vorbestimmten Kriterien ausgewertet wird. Insbesondere kann die Elektronik aus, über die Zeit erfassten Werten des, gegebenenfalls gefilterten, von dem akustischen Wandler bereitgestellten, elektrischen Signals einen RMS-Wert (RMS: Root Mean Square; quadratischer Mittelwert) bilden und diesen als Messgröße auswerten. Werden beispielsweise N Werte des (hier gefilterten) elektrischen Signals $S(t_i)$, die zu N verschiedenen Zeiten $t_i$ (i=1-N) erfasst wurden, zur Berechnung des RMS-Wertes $\overline{S}$ herangezogen, so kann der RMS-Wert anhand der nachfolgenden Gleichung (9) erhalten werden:

$$(9) \quad \overline{S} = \frac{1}{N}\sqrt{\sum_{i=1}^{i=N} S(t_i)^2}$$

Gemäß einer vorteilhaften Weiterbildung ist die Elektronik des Wirbelströmungsmessgerätes derart ausgebildet, dass diese aus der Messgröße mittels eines, durch eine Kalibrierung zu bestimmenden Übertragungsfaktors, durch den die kinetische Energie einzelner Teilchen und/oder Tröpfchen bzw. die kinetische Leistung der Teilchen- und/oder Tröpfchen-Strömung mit der Messgröße korreliert wird, und der Geschwindigkeit der Teilchen- und/oder Tröpfchen-Strömung eine Anzahl und Masse einzelner Teilchen und/oder Tröpfchen bzw. den Massedurchfluss der Teilchen- und/oder Tröpfchen-Strömung bestimmt. Auf diese Weise ist eine quantitative Bestimmung der Teilchen- und/oder Tröpfchen-Strömung des zweiten Mediums möglich.

Je nach Anwendung kann der Übertragungsfaktor gemäß einer ersten Variante derart gewählt und durch Kalibrierung bestimmt werden, dass die Messgröße $\overline{M}$, wie beispielsweise der oberhalb genannte RMS-Wert $\overline{S}$, über den Übertragungsfaktor $C_1$ mit der kinetischen Energie $E_{KIN}$ eines einzelnen, aufprallenden Teilchens oder Tröpfchens korreliert wird. Diese Beziehung ist in der nachstehenden Gleichung (10) wiedergegeben, wobei $m_T$ die Masse eines einzelnen Teilchens oder Tröpfchens und v dessen Geschwindigkeit ist:

$$(10) \quad E_{KIN} = \frac{1}{2}m_T v^2 = C_1 \overline{M}$$

Wie anhand der Gleichung (7) ersichtlich ist, kann dementsprechend aus der Messgröße $\overline{M}$, dem Übertragungsfaktor $C_1$ und der Geschwindigkeit v die Masse $m_T$ eines einzelnen Teilchens bzw. Tröpfchens bestimmt werden. Die Geschwindigkeit v des Teilchens, die der Geschwindigkeit der ersten Phase entspricht, kann in bekannter Weise durch das Wirbelströmungsmessgerät aus der Vortexfrequenz bestimmt werden. Diese erste Variante ist insbesondere dann vorteilhaft, wenn die Dichte der einzelnen Teilchen und/oder Tröpfchen in der Teilchen- und/oder Tröpfchen-Strömung derart niedrig ist, dass die verschiedenen Einschläge der einzelnen Teilchen auf das betreffende Bauteil des Wirbelströmungsmessgerätes separat akustisch detektierbar sind. Die Anzahl der Teilchen und/oder Tröpfchen kann durch Zählen der jeweiligen Einschläge ermittelt werden.

Je nach Anwendung kann der Übertragungsfaktor auch gemäß einer zweiten Variante derart gewählt und durch Kalibrierung bestimmt werden, dass die Messgröße $\overline{M}$, wie beispielsweise der oberhalb genannte RMS-Wert $\overline{S}$, über den Übertragungsfaktor $C_2$ mit der kinetischen Leistung $P_{KIN}$ der Teilchen- und/oder Tröpfchen-Strömung korreliert wird. Diese Beziehung ist in der nachstehenden Gleichung (11) wiedergegeben, wobei mit der Massedurchfluss der Teilchen- und/oder Tröpfchen-Strömung (wobei hierin nur die Masse der Teilchen und/oder Tröpfchen, nicht aber die Masse der ersten Phase eingeht) und v dessen Geschwindigkeit ist:

$$(11) \quad P_{KIN} = \frac{1}{2}\frac{m}{t}v^2 = C_2 \overline{M}$$

Wie anhand der Gleichung (11) ersichtlich ist, kann dementsprechend aus der Messgröße M, dem Übertragungsfaktor $C_2$ und der Geschwindigkeit v der Massedurchfluss mit der Teilchen- und/oder Tröpfchen-Strömung bestimmt werden. Die Geschwindigkeit v der Teilchen kann wiederum durch das Wirbelströmungsmessgerät bestimmt werden. Diese zweite Variante ist insbesondere dann vorteilhaft, wenn die Dichte der einzelnen Teilchen und/oder Tröpfchen in der Teilchen- und/oder Tröpfchen-Strömung derart hoch ist, dass die verschiedenen Einschläge der einzelnen Teilchen auf das betreffende Bauteil des Wirbelströmungsmessgerätes nicht mehr separat akustisch detektierbar sind.

Sowohl bei der ersten als auch bei der zweiten Variante kann der Übertragungsfaktor $C_1$ bzw. $C_2$ als Konstante gewählt werden, so dass die Kalibrierung und die durchzuführenden Berechnungen einfach sind. Alternativ kann der Übertragungsfaktor $C_1$ bzw. $C_2$ aber auch in Abhängigkeit von weiteren Größen, wie beispielsweise Temperatur, Druck, geometrische Größen, etc., definiert werden. Dadurch können weitere Einflüsse bei der quantitativen Bestimmung mit berücksichtigt werden.

Die vorliegende Erfindung betrifft ferner ein Wirbelströmungsmessgerät gemäß Anspruch 10.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:

Fig.1: eine schematische Darstellung eines Wirbelströmungsmessgerätes in perspektivischer, teilweise aufgeschnittener Darstellung gemäß einer ersten Ausführungsform der Erfindung;

Fig. 2: eine schematische Darstellung eines Wirbelströmungsmessgerätes in perspektivischer, teilweise aufgeschnittener Darstellung gemäß einer zweiten Ausführungsform der vorliegenden Erfindung;

Fig. 3: zeitlicher Signalverlauf eines typischen Messsignals y(t) (obere Abbildung) und dessen Schätzung der spektralen Leistungsdichte (untere Abbildung)

Fig. 4: eine schematische Darstellung zur Erläuterung einer Signalverarbeitung des Messsignals zur Bestimmung des Massedurchflusses der zweiten Phase, wie in dieser Patentschrift genauer erläutert;

Fig. 5: eine graphische Darstellung der Kurtosis eines gefilterten Messsignals $s_a(t)$ über der Vortexfrequenz für verschiedene Massedurchflüsse von Wasser (zweite Phase) und für verschiedene Strömungsgeschwindigkeiten von Luft (erste Phase) bei einer zweiphasigen Strömung aus Wasser und Luft;

Fig. 6: eine graphische Darstellung der Kurtosis eines gefilterten Messsignals $s_a(t)$ über der Vortexfrequenz für verschiedene Strömungsgeschwindigkeiten von reiner (trockener) Luft (erste Phase) zur Bestimmung einer linearen Ausgleichsfunktion;

Fig. 7: eine graphische Darstellung der Differenz von Kurtosis-Werten der Ausgleichsfunktion und Kurtosis-Werten des jeweiligen gefilterten Messsignals über der Vortexfrequenz für verschiedene Massedurchflüsse von Wasser (zweite Phase) und für verschiedene Strömungsgeschwindigkeiten von Luft (erste Phase) bei einer zweiphasigen Strömung aus Wasser und Luft;

Fig. 8: eine dreidimensionale, graphische Darstellung, in der für verschiedene Massedurchflüsse von Wasser (zweites Phase) und für verschiedene Strömungsgeschwindigkeiten von Luft (erstes Phase) jeweils der Massedurchfluss von Wasser, die aus dem gefiltertem Messsignal bestimmte Vortexfrequenz und die aus dem gefiltertem Messsignal bestimmte Differenz der Kurtosis-Werte zueinander korreliert werden; und

Fig. 9: eine graphische Darstellung der Standardabweichung der Betragsamplitude eines analytischen gefiltertem Messsignals des erfassten Messsignals über der Vortexfrequenz für verschiedene Massedurchflüsse von Wasser (zweite Phase) und für verschiedene Strömungsgeschwindigkeiten von Luft (erste Phase).

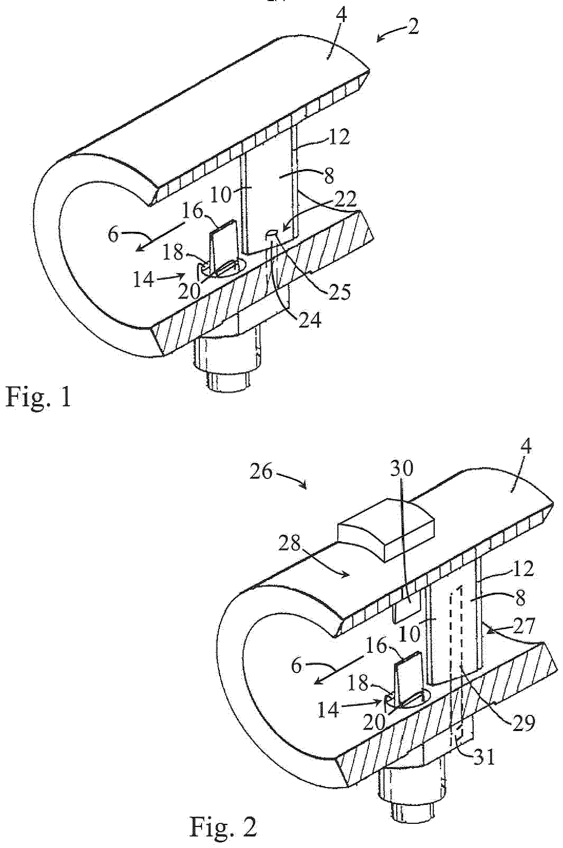

In Fig. 1 ist schematisch ein Wirbelströmungsmessgerät 2 gemäß einer ersten Ausführungsform der Erfindung in perspektivischer Ansicht dargestellt. Das Wirbelströmungsmessgerät 2 weist ein Messrohr 4 auf, das in Fig. 1 in teilweise aufgeschnittener Darstellung gezeigt ist. Im Einsatz wird das Messrohr 4 derart in eine (nicht dargestellte) Rohrleitung, deren Durchfluss einer ersten Phase (hier: Gas) zu bestimmen ist, eingesetzt, so dass es von der ersten Phase in einer Strömungsrichtung 6 durchströmt wird.

Das Wirbelströmungsmessgerät 2 weist einen Staukörper 8 auf, der sich in diametraler Richtung über den gesamten Innenquerschnitt des Messrohres 4 erstreckt. In einer, in Fig. 1 dargestellten Einsatzstellung des Wirbelströmungsmessgerätes 2 erstreckt sich das Messrohr 4 im Wesentlichen horizontal, während sich der Staukörper 8 im Wesentlichen vertikal, also parallel zur Richtung der Schwerkraft, erstreckt. Der Staukörper 8 ist dabei derart ausgebildet, dass er auf der Seite (in Fig. 1 verdeckt), die der Strömung zugewandt ist, eine Prallfläche aufweist, die von dem jeweiligen Medium angeströmt wird. Beidseitig der Prallfläche grenzt jeweils eine Seitenfläche 10 an, wobei sich die beiden Seitenflächen 10 entlang der Strömungsrichtung 6 verjüngen, so dass der Staukörper 8 einen, im Wesentlichen Δ-förmigen Querschnitt aufweist. Beidseitig der Prallfläche ist jeweils eine Abrisskante 12 (in Fig. 1 ist nur eine der beiden Abrisskanten 12 sichtbar) vorgesehen, die den Übergang zu den beiden Seitenflächen 10 bilden. Wie anhand der Fig. 1 ersichtlich ist, kann das jeweilige Medium beidseitig des Staukörpers 8 vorbeiströmen, wobei sich, wie oberhalb erläutert wird, wechselseitig an den beiden Abrisskanten 12 jeweils Wirbel ablösen. Dementsprechend bildet sich im Einsatz in dem Bereich hinter den beiden Abrisskanten 12 eine Kärmän'sche Wirbelstraße aus.

Das Wirbelströmungsmessgerät 2 weist ferner einen, stromabwärts von dem Staukörper 8 angeordneten Wirbelsensor 14 auf. Der Wirbelsensor 14 weist in dem vorliegenden Ausführungsbeispiel ein Paddel 16 auf, das sich durch eine Bohrung 18, die auf der, am tiefsten gelegenen Mantellinie des Messrohrs 4 ausgebildet ist, in den Strömungspfad erstreckt. Dabei ist das Paddel 16 in einer Ruhestellung parallel zu dem Staukörper 8 und fluchtend zu diesem angeordnet. Das Paddel 16 ist in einer Richtung senkrecht zu der Strömungsrichtung 6 und senkrecht zu der Erstreckungsrichtung des Paddels 16 schwenkbar. Dementsprechend wird das Paddel 16 im Einsatz aufgrund auftretender Druckschwankungen, insbesondere aufgrund der gebildeten Wirbel, hin- und herbewegt. Wie oberhalb erläutert wird, werden die Schwenkbewegungen des Paddels mittels eines (nicht näher dargestellten) DSC-Sensors in ein elektrisch verarbeitbares Messsignal umgewandelt. Verschiedene Arten einer Analyse des dabei erhaltenen elektrischen Messsignals, die durch eine (nicht dargestellte) Elektronik des Wirbelströmungsmessgerätes 2 durchgeführt werden, werden unterhalb unter Bezugnahme auf die Figuren 3 ff. erläutert.

Dadurch, dass sich das Paddel 16 von der Unterseite her durch das Messrohr 4 in den Strömungspfad erstreckt, bildet das Paddel 16 einen, auf auftretende Druckschwankungen ansprechenden, sensitiven Abschnitt, der teilweise angrenzend an der Rohrwand des Messrohres 4 angeordnet ist und der in einer unteren Hälfte des Messrohres 4 angeordnet ist. Tritt in dem Gas, welches in dem vorliegenden Ausführungsbeispiel die erste Phase bildet, ein Gerinne (zweite Phase) auf, so sammelt sich dieses aufgrund der Schwerkraft in dem unteren Bereich des Messrohres 4 an und strömt direkt angrenzend an dem Paddel 16. Umliegend um das Paddel 16 ist innerhalb der Bohrung 18 zusätzlich eine Vertiefung 20 ausgebildet, in der sich bei Auftreten eines Gerinnes ein Teil des Gerinnes ansammelt. Sowohl bei dem Vorbeiströmen des Gerinnes an dem Paddel 16 als auch durch die Ansammlung des Gerinnes innerhalb der Vertiefung 20 tritt eine Wechselwirkung des Gerinnes mit dem Paddel 16 auf. Aufgrund dieser Wechselwirkung wird das, über das Paddel 16 erfasste Messsignal beeinflusst. Insbesondere wird eine Amplitudenfluktuation des Messsignals erhöht. Verschiedene Varianten der Analyse des erhaltenen, elektrischen Messsignals, um eine Detektion eines Gerinnes zu ermöglichen, werden unterhalb unter Bezugnahme auf die Figuren 3 ff. erläutert.

In Fig. 1 ist ferner in gestrichelter Linienführung eine alternative Variante eines Wirbelsensors 22, der innerhalb des Staukörpers 8 ausgebildet ist, dargestellt. Bei dieser alternativen Variante ist innerhalb des Staukörpers 8 parallel zu der Erstreckungsrichtung des Staukörpers 8 eine Sackbohrung 24 zur Aufnahme des Wirbelsensors 22 vorgesehen. Diese Sackbohrung 24 weist mindestens eine Durchgangsöffnung 25 auf, die eine Fluid-Verbindung zwischen dem jeweiligen Medium innerhalb des Messrohres 4 und der Sackbohrung 24 herstellt. Dementsprechend kann ein, innerhalb der Sackbohrung 24 angeordneter Wirbelsensor 22 Druckschwankungen, die in dem Messrohr 4 stromabwärts der Abrisskanten 10 auftreten und insbesondere durch Wirbel hervorgerufen werden, erfassen und auf eine der oberhalb erläuterten Varianten in ein elektrisches Messsignal umwandeln. Der nicht näher dargestellte Wirbelsensor 22 kann beispielsweise, wie oberhalb erläutert wird, eine schwenkbare Sensorhülse aufweisen, deren Schwenkbewegungen relativ zu einem, von den Druckschwankungen entkoppelten Abschnitt erfasst werden.

In Fig. 2 ist schematisch ein Wirbelströmungsmessgerät 26 gemäß einer zweiten Ausführungsform der Erfindung in perspektivischer Ansicht dargestellt. Im Folgenden wird vorwiegend auf die Unterschiede gegenüber der ersten, unter Bezugnahme auf Fig. 1 erläuterten Ausführungsform eingegangen. Für gleiche Bauteile werden wiederum die gleichen Bezugszeichen verwendet.

Das Wirbelströmungsmessgerät 26 weist im Unterschied zu der ersten Ausführungsform einen zweiten Wirbelsensor 28 auf, der stromabwärts von dem Staukörper 8 angeordnet ist. Dieser zweite Wirbelsensor 28 weist wiederum ein Paddel 30 auf, das sich durch eine (nicht sichtbare) Bohrung, die auf der, am höchsten gelegenen Mantellinie des Messrohrs 4 ausgebildet ist, in den Strömungspfad erstreckt. Dementsprechend ist das Paddel 30 des zweiten Wirbelsensors 28 gegenüberliegend von dem Paddel 16 des ersten Wirbelsensors 14 angeordnet. Dabei ist das Paddel 30 (des zweiten Wirbelsensors 28) in einer Ruhestellung parallel zu dem Staukörper 8 und fluchtend zu diesem angeordnet. Das Paddel 30 ist in einer Richtung senkrecht zu der Strömungsrichtung 6 und senkrecht zu der Erstreckungsrichtung des Paddels 30 schwenkbar. Dementsprechend wird das Paddel 30 im Einsatz aufgrund auftretender Druckschwankungen, insbesondere aufgrund der gebildeten Wirbel, hin- und herbewegt. Die Schwenkbewegungen des Paddels 30 werden in entsprechender Weise, wie es oberhalb in Bezug auf den ersten Wirbelsensor 14 erläutert wird, in ein elektrisches Messsignal umgewandelt. Das dabei erhaltene Messsignal bildet ein Referenzsignal für eine reine Strömung der ersten Phase des strömenden Mediums.

Anhand dieses Referenzsignals kann das elektrische Messsignal des ersten Wirbelsensors 14 (oder auch daraus abgeleitete Größen, wie beispielsweise eine Standardabweichung oder eine Kurtosis) auf einfache Weise mit dem Referenzsignal (bzw. gegebenenfalls daraus abgeleiteten Größen, wie beispielsweise einer Standardabweichung oder einer Kurtosis) verglichen werden. Beispielsweise kann ein oberer Grenzwert für eine Differenz der Standardabweichung oder der Kurtosis, die aus dem Messsignal des ersten Wirbelsensors 14 bestimmt wurde, von der Standardabweichung bzw. der Kurtosis, die aus dem Messsignal des zweiten Wirbelsensors 28 bestimmt wurde, festgelegt werden, bei dessen Überschreiten auf die Existenz eines Gerinnes geschlossen wird. Dementsprechend kann bei dieser zweiten Ausführungsform eine Detektion eines Gerinnes, das als Wandströmung entlang eines unteren Rohrabschnittes des Messrohres 4 strömt, auf einfache Weise ohne eine vorherige Kalibrierung des Wirbelströmungsmessgerätes 26 durchgeführt werden. Das Wirbelströmungsmessgerät 26 ist dabei derart ausgebildet, dass es bei Auftreten eines Gerinnes eine Warnmeldung ausgibt.

Ferner ist das in Fig. 2 dargestellte Wirbelströmungsmessgerät 26 derart ausgebildet, dass durch dieses auch eine Teilchen- und/oder Tröpfchenströmung der zweiten bzw. einer dritten Phase des strömenden Mediums detektierbar sowie quantitativ bestimmbar ist.

Die Fläche des Staukörpers 8, die der Strömung zugewandt ist, bildet dabei eine Prallfläche 27 für die ankommenden Teilchen bzw. Tröpfchen. Tritt in der strömenden, ersten Phase (hier Gas) eine Teilchen- und/oder Tröpfchen-Strömung (hier: Tröpfchen-Strömung aus Wasser) auf, so prallt ein Teil der Teilchen und/oder Tröpfchen, der in der Regel dem Verhältnis der Prallfläche 27 zu dem Innenquerschnitt des Messrohres 4 (bei einer gleichmäßig über den Innenquerschnitt verteilten Teilchen- und/oder Tröpfchen-Strömung) entspricht, auf die Prallfläche 27 des Staukörpers 8 auf.

Durch solch einen Aufprall von Teilchen und/oder Tröpfchen werden akustische Signale erzeugt. Innerhalb des Staukörpers 8 ist ein Ankopplungsbauteil 29 angeordnet, das in Fig. 2 stabförmig dargestellt ist und das der akustischen Ankopplung zwischen einem akustischen Wandler 31 und dem Staukörper 8 (insbesondere dessen Prallfläche 27) dient. Über dieses Ankopplungsbauteil 29 werden die, bei dem Aufprall von Teilchen und/oder Tröpfchen auf die Prallfläche 27 erzeugten, akustischen Signale nach Außen zu einer Außenseite des Messrohres 4 geleitet. Außerhalb des Messrohres 4 ist an dem Ankopplungsbauteil 29 der akustische Wandler 31, der bei der vorliegenden Ausführungsform durch ein Piezoelement gebildet wird, derart angebracht, dass durch diesen die akustischen Signale erfassbar sind. Durch den akustischen Wandler 31 werden die akustischen Signale in entsprechende, elektrische Signale umgewandelt. Die, durch den akustischen Wandler 31 bereitgestellten, elektrischen Signale werden anschließend an eine AuswerteElektronik des Wirbelströmungsmessgerätes 2 gegeben.

Die elektrischen Signale, die durch den akustischen Wandler 20 ausgegeben werden, werden anschließend durch eine entsprechend ausgebildete Elektronik, wie es oberhalb im allgemeinen Beschreibungsteil erläutert wird, verstärkt und auf einen auszuwertenden Frequenzbereich gefiltert. Der auszuwertende Frequenzbereich ist beispielsweise ein Bereich von 100 kHz bis 1 MHz. Anschließend wird daraus durch die Elektronik, wie oberhalb im allgemeinen Beschreibungsteil erläutert wird, eine auszuwertende Messgröße, wie beispielsweise ein RMS-Wert, bestimmt. Wird lediglich eine Detektion einer Teilchen- und/oder Tröpfchen-Strömung durchgeführt, so ist die Elektronik beispielsweise derart ausgebildet, dass bei Über- (oder gegebenenfalls auch Unter-)-schreiten eines vorbestimmten Grenzwertes der Messgröße auf das Vorliegen einer Teilchen- und/oder Tröpfchen-Strömung geschlossen wird. Soll lediglich eine Detektion durchgeführt werden, so kann gegebenenfalls auch auf die Bestimmung einer auszuwertenden Messgröße verzichtet werden und es kann beispielsweise ein Grenzwert für die Signalstärke des elektrischen Signals bestimmt werden.

Soll zusätzlich eine quantitative Auswertung bezüglich der Teilchen- und/oder Tröpfchen-Strömung durchgeführt werden, so muss im Voraus im Rahmen einer Kalibrierung, wie es oberhalb im allgemeinen Beschreibungsteil erläutert wird, ein Übertragungsfaktor ($C_1$ bzw. $C_2$) bestimmt werden, durch den die kinetische Energie (Übertragungsfaktor $C_1$) einzelner Teilchen und/oder Tröpfchen bzw. durch den die kinetische Leistung (Übertragungsfaktor $C_2$) der Teilchen- und/oder Tröpfchen-Strömung mit der Messgröße korreliert wird. Hierbei wird auf die Gleichungen (7) und (8) sowie die zugehörige Beschreibung im allgemeinen Beschreibungsteil Bezug genommen. Über die Geschwindigkeit v der Teilchen- und/oder Tröpfchen-Strömung, die durch das Wirbelströmungsmessgerät 2 aus der Vortexfrequenz ermittelt werden kann, kann dann die Masse einzelner Teilchen und/oder Tröpfchen bzw. der Massedurchfluss der Teilchen- und/oder Tröpfchen-Strömung bestimmt werden (vgl. Gleichungen (7) und (8)).

Fig. 3 zeigt ein typisches Messsignal einer reinen einphasigen Strömung (hier Luft) mit überlagerten Störanteilen auf Grund von Vibrationen. In der unteren Abbildung von Fig. 3 ist die spektrale Leistungsdichte des Signals, wie Ausschnittsweise in der oberen Abbildung von Fig. 3 dargestellt, abgebildet. Fig. 3 soll verdeutlichen, dass es, um eine zutreffende Aussage über den Anteil der zweiten Phase treffen zu können, notwendig ist, bevor eine insbesondere statistische Auswertung des Messsignals erfolgt, den Frequenzbereich V um die Vortexfrequenz schmalbandig aus dem Messsignal mittels eines schmalbandigen Filters zu selektieren. Damit wird gewährleistet, dass Störsignale (z.B. Störsignal S) nicht zur Verfälschung der Überwachung der zweiten Phase beitragen, insbesonders dann, wenn die Magnitude der Störanteile grösser ist als die des Nutzsignals, wie es bei kleinen Durchflussmengen der Fall ist..

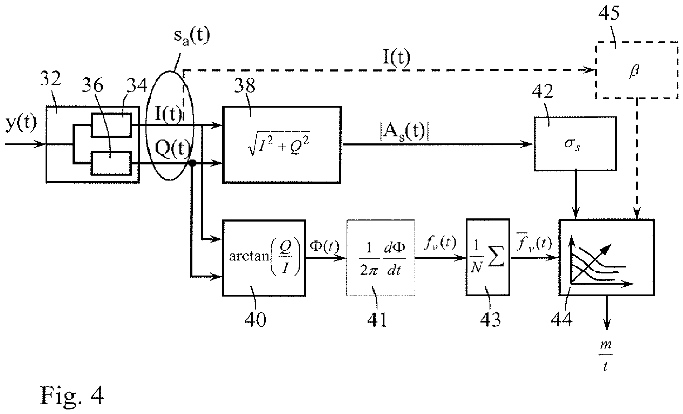

Nachfolgend wird unter Bezugnahme auf Fig. 4 eine Möglichkeit der rein digitalen Signalverarbeitung des Messsignals erläutert, um daraus eine statistische Grösse wie etwa die Standardabweichung der Betragamplitude und/oder die Kurtosis eines schmalbandig gefilterten analytischen Signals $s_a(t)$des Messsignals y(t) zu ermitteln und daraus wiederum den Massedurchfluss der in Form einer Gerinne- oder auch einer Wandströmung ausgebildeten zweiten Phase zu bestimmen. Das erfasste Messsignal y(t) wird zunächst in einer Filterstufe 32 auf eine Bandbreite von kleiner 50% der Vortexfrequenz mit der Vortexfrequenz als Mittenfrequenz gefiltert. Die Filterstufe 32 weist dafür zwei parallel geschaltete Filter 34 und 36 auf. Bei einem ersten 34 der beiden Filter sind die Filterkoeffizienten derart gewählt, dass das gefilterte Messsignal I(t) möglichst ohne Phasenverschiebung ausgegeben wird. Dieser erste Filter 34 wird im Folgenden als In-Phase-Filter 34 bezeichnet. Bei dem zweiten Filter 36 sind die Filterkoeffizienten derart gewählt, dass das gefilterte Messsignal Q(t) eine Phasenverschiebung um +90° gegenüber dem gefilterten Messsignal I(t) des In-Phase-Filters 34 aufweist. Der zweite Filter 36 wird im Folgenden als Quadratur-Filter 36 bezeichnet. Wird beispielsweise das Messsignal vereinfacht (ohne Berücksichtigung der weiteren Frequenzen) als U(t)*sin($\omega_V$t) beschrieben, wobei $\omega_V$ die Vortexfre-

quenz ist, so ist das Signal, das von dem In-Phase-Filter 34 geliefert wird, I(t)=U(t)*sin($\omega_V$t), während das Signal, das von dem Quadratur-Filter 36 geliefert wird, Q(t)=U(t)*cos($\omega_V$t) ist. Um sicherzustellen, dass die beiden, jeweils zusammengehörigen Signale I(t) und Q(t) zeitgleich von den beiden Filtern 34 und 36 ausgegeben werden, weisen die beiden Filter 34 und 36 die gleiche Gruppenlaufzeit auf.

Anschließend wird aus den ausgegebenen Signalen I(t) und Q(t) mittels eines CORDIC-Algorithmus ein Amplitudenbetrag $A_s$(t) (siehe Box 38) des analytischen Signals und die Phase $\Phi$(t) des analytischen Signals (siehe Box 40) ermittelt. Der Amplitudenbetrag $A_s$(t) ergibt sich insbesondere aus den beiden ausgegebenen Signalen I(t) und Q(t) anhand der Gleichung (3). Die Phase $\Phi$(t) des analytischen Signals ergibt sich anhand Gleichung (4). Durch Differenzieren der Phase $\Phi$(t) nach der Zeit kann ferner die momentane Vortexfrequenz $f_V$(t) erhalten werden (siehe Box 41). Um eine mittlere Vortexfrequenz $\overline{f}_v$ der Strömung zu erhalten, wird die momentane Vortexfrequenz über N Werte entsprechend gemittelt (vgl. Box 43).

Bei einer digitalen Realisierung können die zu verschiedenen Zeiten $t_i$ auf die gemäß oberhalb erläuterter Weise bestimmten Amplitudenbeträge $A_s$($t_i$) beispielsweise in einem Puffer- oder Ringspeicher gespeichert werden. Dabei wird das Messsignal y(t) möglichst in jeweils gleichen Zeitabständen gefiltert und analysiert und daraus der Amplitudenbetrag $A_s$(t) ermittelt. Die Zeitabstände werden dabei in Abhängigkeit von der Vortexfrequenz geeignet gewählt. Aus dem Pufferspeicher werden dann N, beispielsweise 100, aufeinander folgende Werte $A_s$(ti) des Amplitudenbetrages, die in zeitlicher Abfolge ermittelt wurden, ausgelesen und daraus die Standardabweichung (vgl. Gleichung (3)) berechnet. (siehe Box 42). Anschließend wird anhand einer Korrelation, in der eine Standardabweichung der Betragsamplitude, eine Vortexfrequenz und ein Massedurchfluss eines Gerinnes der zweiten Phase zueinander in Beziehung gesetzt sind, ein Massedurchfluss mit des Gerinnes ermittelt (siehe Box 44). Die Korrelation ist dabei als Fit-Funktion in dem Wirbelströmungsmessgerät hinterlegt. Die Bestimmung solch einer Fit-Funktion bzw. Korrelation kann dabei experimentell mit verschiedenen, bekannten Massedurchflüssen der zweiten Phase in Form eines Gerinnes und verschiedenen Strömungsgeschwindigkeiten der ersten Phase eines strömenden Mediums erfolgen.

Anstatt der Standardabweichung der Betragsamplitude des gefilterten analytischen Signals kann alternativ auch die Kurtosis von I(t)=Re($s_a$(t)), des realen Anteils des gefilterten Signals $s_a$(t), zur Überwachung/Kalibrierung herangezogen werden. Dies ist in Fig. 4 in gestrichelter Form als Variante in Bezug auf Box 45 angedeutet.

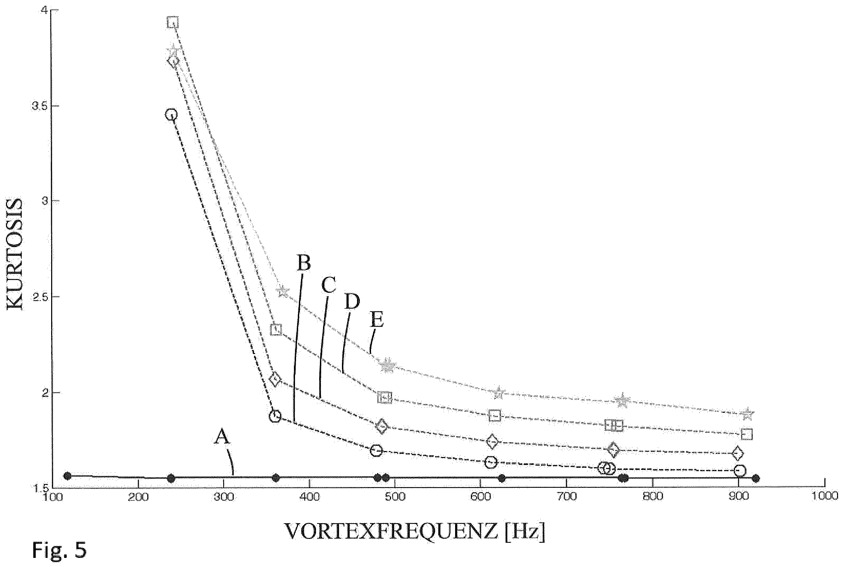

Nachfolgend wird unter Bezugnahme auf die Fig. 5 bis 8 eine Variante zur Bestimmung einer Fit-Funktion bzw. Korrelation, durch welche eine Kurtosis des Messsignals, eine Vortexfrequenz und ein Massedurchfluss eines Gerinnes der zweiten Phase eines strömenden Mediums zueinander in Beziehung gesetzt werden, erläutert. Dabei wird die erste Phase des Mediums durch Luft und die zweite Phase durch Wasser gebildet, wobei das Wasser als Wandströmung (bzw. Wandfilmströmung), d.h. als Gerinne, entlang der Rohrwand des Messrohres strömt. Eine Korrelation, wie sie bei der in Fig. 4 dargestellten Signalverarbeitung eingesetzt wird und durch welche eine Standardabweichung der Betragsamplitude des gefilterten analytischen Signals, eine Vortexfrequenz und ein Massedurchfluss eines Gerinnes der zweiten Phase eines strömenden Mediums zueinander in Beziehung gesetzt werden, kann dabei in entsprechender Weise bestimmt werden.

In Fig. 5 ist jeweils die Kurtosis des gefilterten Messsignals Re($s_a$(t)) über der Vortexfrequenz graphisch dargestellt. Dabei entsprechen die verschiedenen Messkurven jeweils unterschiedlichen Massedurchflüssen des Gerinnes. Insbesondere lag bei Graph A eine reine Luftströmung, bei Graph B ein Massedurchfluss von Wasser von 10 kg/h (Kilogramm pro Stunde), bei Graph C ein Massedurchfluss von Wasser von 20 kg/h, bei Graph D ein Massedurchfluss von Wasser von 30 kg/h und bei Graph E ein Massedurchfluss von Wasser von 40 kg/h vor. Diese Buchstaben-Notation der verschiedenen Graphen für verschiedene Massedurchflüsse von Wasser wird durchgehend durch die Figuren 5 bis 9 beibehalten. Die verschiedenen Messpunkte eines Graphen wurden jeweils dadurch erhalten, dass (bei gleich bleibendem Massedurchfluss von Wasser) jeweils unterschiedliche Strömungsgeschwindigkeiten von Luft (erste Phase) eingestellt wurden. Die Kurtosis kann dabei aus dem Messsignal, das zuvor schmalbandig um die jeweilige Vortexfrequenz gefiltert wurde, gemäß den Gleichungen ((6) bis (8) erhalten werden.

Wie anhand der Fig. 5 ersichtlich ist, nimmt der Wert der Kurtosis bei jeweils gleich bleibender Vortexfrequenz mit zunehmendem Massedurchfluss von Wasser zu. Ferner ist anhand der Fig. 5 ersichtlich, dass im Bereich niedriger Strömungsgeschwindigkeiten von Luft, bei dem vorliegenden Ausführungsbeispiel bei Vortexfrequenzen deutlich unter 350 Hz, dieses Verhalten nur noch eingeschränkt zutrifft. Dementsprechend ist die Heranziehung der Kurtosis des Messsignals zur Bestimmung des Massedurchflusses der Gerinneströmung von Wasser (allgemein des zweiten Mediums) nur bei Strömungsgeschwindigkeiten der ersten Phase geeignet, die oberhalb einer jeweils zu bestimmenden Grenz-Strömungsgeschwindigkeit liegen. Diese Grenz-Strömungsgeschwindigkeit hängt von dem jeweiligen Wirbelströmungsmessgerät, insbesondere von dem Durchmesser des Messrohres, sowie von den Eigenschaften der ersten und zweiten Phase ab.

Zunächst wird für eine reine Luftströmung für verschiedene Strömungsgeschwindig-keiten der Luft die jeweilige Vortexfrequenz über den Luftvolumenstrom mit einer linearen Funktion angenähert. Die Steigung der linearen Funktion entspricht dabei dem Kalibrierfaktor, der allgemein bei Wirbelströmungsmessgeräten, insbesondere für die Durchflussmessung von einphasigen Fluiden, bestimmt werden muss. Dieser Schritt ist in den Figuren nicht graphisch dargestellt.

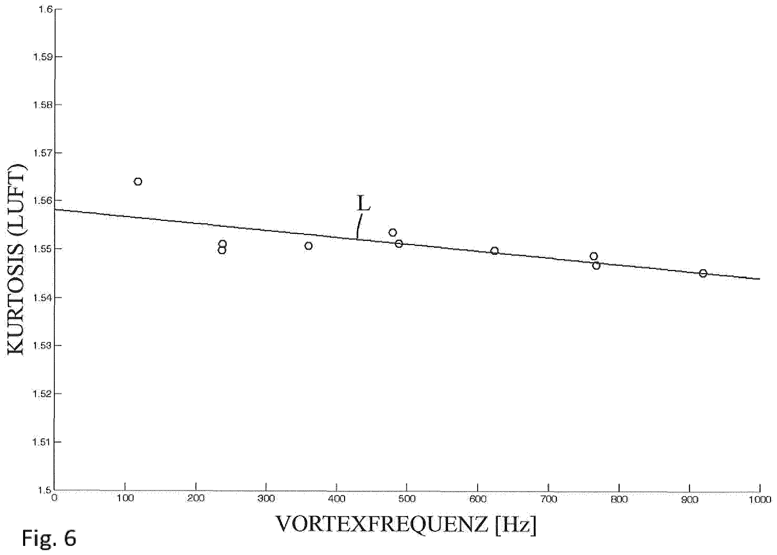

In einem nächsten Schritt wird bei einer reinen Luftströmung die Kurtosis für verschiedene Strömungsgeschwindigkeiten von Luft (erste Phase) ermittelt und der Verlauf wiederum durch eine lineare Ausgleichsfunktion angenähert. Dies ist in Fig. 6 graphisch dargestellt, in der für verschiedene Strömungsgeschwindigkeiten von Luft jeweils die Werte der Kurtosis über der Vortexfrequenz aufgetragen sind. In Fig. 6 sind die einzelnen Messpunkte jeweils als Kreise dargestellt, während die lineare Ausgleichsfunktion L als durchgezogene Gerade eingezeichnet ist. Die bei diesem Schritt erhaltene lineare Ausgleichsfunktion L wird als Referenz gegenüber Werten der Kurtosis, die bei Auftreten eines Wasser-Gerinnes ermittelt werden, herangezogen.

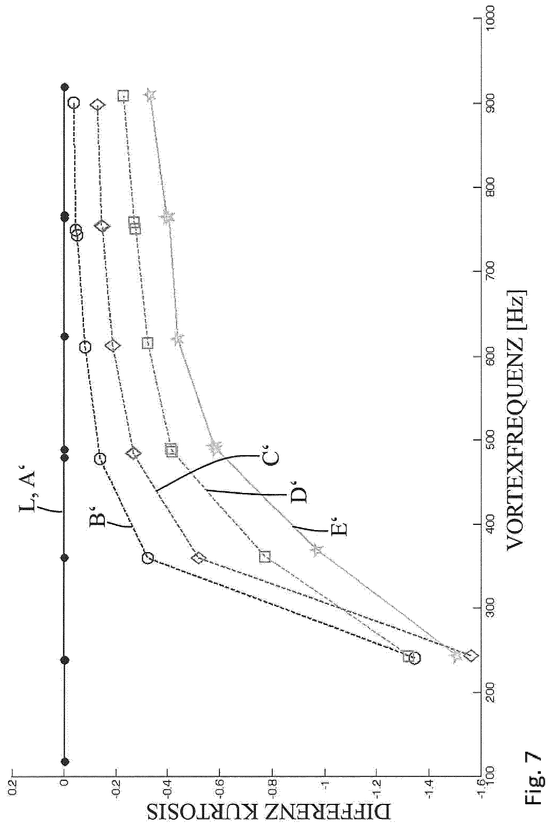

In einem nächsten Schritt wird die Differenz der Graphen A-E der Kurtosis über der Vortexfrequenz, die in Fig. 5 dargestellt sind, von der linearen Ausgleichsfunktion L (vgl. Fig. 6) gebildet. Die dabei erhaltenen Graphen A'-E', bei denen jeweils die Differenz der Kurtosis über der Vortexfrequenz aufgetragen ist, sind in Fig. 7 dargestellt.

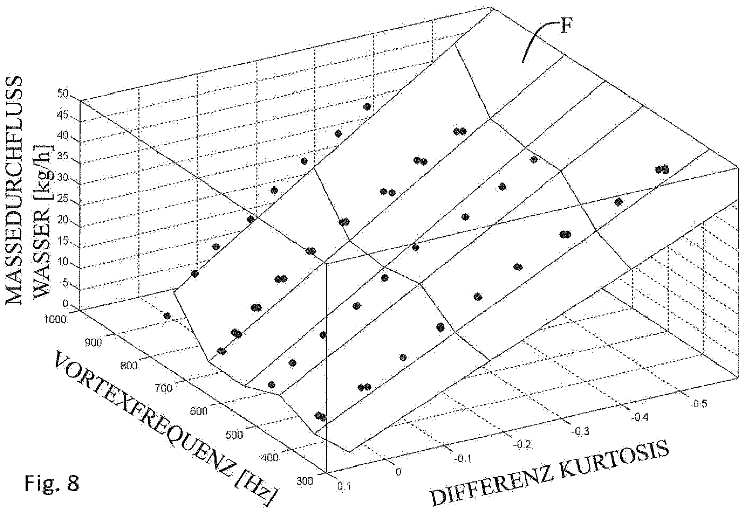

In einem letzten Schritt werden schließlich für die verschiedenen, durchgeführten Messungen die Differenz der Kurtosis, die Vortexfrequenz und der (jeweils bekannte) Massedurchfluss von Wasser (das als Gerinne strömt) zueinander in Beziehung gesetzt. Die, in dem dreidimensionalen Raum eingezeichneten Messpunkte werden ferner durch eine Fläche F angenähert, welche die Fit-Funktion bzw. Korrelation bildet. Dies ist in Fig. 8 graphisch dargestellt. Dabei sind in Fig. 8 in dem dreidimensionalen Raum, der durch die Differenz der Kurtosis, die Vortexfrequenz und durch den Massedurchfluss von Wasser (das als Gerinne strömt) aufgespannt wird, die einzelnen Messpunkte jeweils als schwarze Punkte eingezeichnet. Die Fläche F ist in Fig. 8 ebenfalls eingezeichnet.

Im Einsatz des Wirbelströmungsmessgerätes kann aus der, durch das Wirbelströmungsmessgerät aus dem Messsignal bestimmten Vortexfrequenz und dem, im Voraus ermittelten Kalibrierfaktor eine Strömungsgeschwindigkeit und/oder ein Volumenstrom der Luft (erstes Medium) ermittelt werden. Ferner kann durch die Bestimmung der Kurtosis des Messsignals die Differenz derselben von der linearen Ausgleichsfunktion L berechnet werden. Über die Fläche F, welche beispielsweise als Kennzahl in dem Wirbelströmungsmessgerät hinterlegt ist, kann durch die erhaltene Vortexfrequenz und die erhaltene Differenz der Kurtosis der Massedurchfluss von Wasser (zweite Phase), das als Gerinne strömt, ermittelt werden. Ferner kann gegebenenfalls eine Korrektur des Volumenstromes von Luft (erste Phase) durchgeführt werden. Hierzu wird beispielsweise aus dem ermittelten Massedurchfluss des Wassers die dadurch bedingte Verringerung der Querschnittsfläche für die strömende Luft abgeschätzt. Anhand dieser Größe kann dann der, aus der Vortexfrequenz bestimmte Volumenstrom der Luft (erste Phase) bestimmt werden.

Soll das Wirbelströmungsmessgerät ausschließlich zur Detektion eines Gerinnes (allgemein einer zweiten Phase) eingesetzt werden, so müssen nicht sämtliche, der oberhalb erläuterten Schritte zur Bestimmung der Korrelation bzw. Fit-Funktion durchgeführt werden. Vielmehr ist es beispielsweise ausreichend, wenn lediglich die lineare Ausgleichsfunktion L, wie es in Fig. 6 dargestellt ist, ermittelt wird und im Einsatz des Wirbelströmungsmessgerätes dann jeweils die Differenz der Kurtosis, wie es in Fig. 7 dargestellt ist, ermittelt wird. Ferner kann ein Grenzwert für die Differenz der Kurtosis festgelegt werden, bei dessen Überschreiten ein Gerinne (allgemein eine Wandströmung einer zweiten Phase) detektiert wird. Der Grenzwert kann dabei auch in Abhängigkeit von der jeweiligen Vortexfrequenz festgelegt werden.

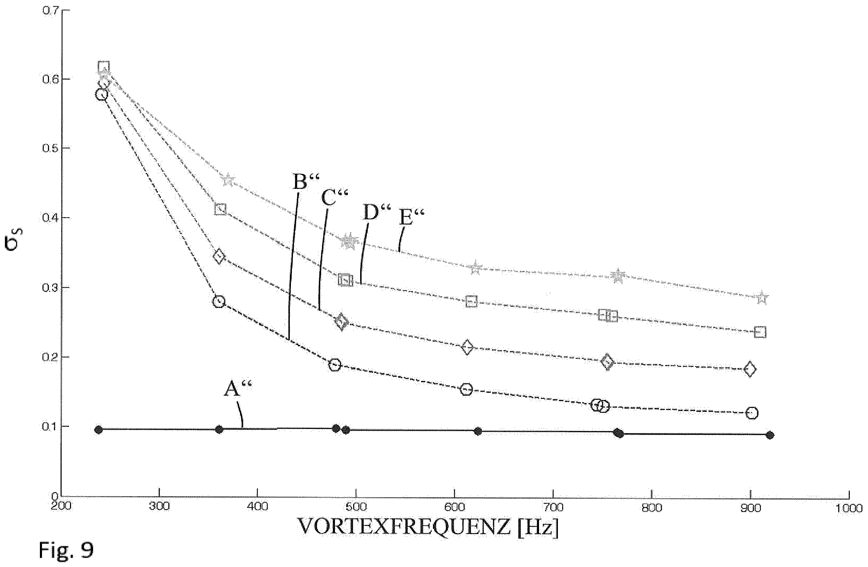

In Fig. 9 ist jeweils die Standardabweichung $\sigma_s$ der Betragsamplitude des gefilterten analytischen Signals des erfassten Messsignals über der Vortexfrequenz graphisch dargestellt. Dabei entsprechen die verschiedenen Messkurven A"-E" jeweils unterschiedlichen Massedurchflüssen des Wasser-Gerinnes in Luft, wie es in der Buchstaben-Notation oberhalb angegeben ist. Die verschiedenen Messpunkte eines Graphen wurden jeweils dadurch erhalten, dass (bei gleich bleibendem Massedurchfluss von Wasser) jeweils unterschiedliche Strömungsgeschwindigkeiten von Luft (erstes Medium) eingestellt wurden. Die Standardabweichung "$\sigma_s$ kann dabei, wie es unter Bezugnahme auf Fig. 4 erläutert wurde, aus dem Messsignal erhalten werden.

Wie anhand der Fig. 5 ersichtlich ist, nimmt der Wert der Standardabweichung (bei jeweils gleich bleibender Vortexfrequenz) mit zunehmendem Massedurchfluss von Wasser zu. Ferner ist anhand der Fig. 5 ersichtlich, dass im Bereich niedriger Strömungsgeschwindigkeiten von Luft, bei dem vorliegenden Ausführungsbeispiel bei Vortexfrequenzen deutlich unter 350 Hz, dieses Verhalten nur noch eingeschränkt zutrifft. Dementsprechend ist die Heranziehung der Standardabweichung zur Bestimmung des Massedurchflusses von Wasser (allgemein der zweiten Phase) nur bei Strömungsgeschwindigkeiten der ersten Phase eines strömenden Mediums geeignet, die oberhalb einer jeweils zu bestimmenden Grenz-Strömungsgeschwindigkeit liegen. Diese Grenz-Strömungsgeschwindigkeit hängt wiederum von dem jeweiligen Wirbelströmungsmessgerät, insbesondere von dem Durchmesser des Messrohres, sowie von den Eigenschaften der ersten und zweiten Phase des Mediums ab.

Wie anhand der Fig. 9 ersichtlich ist, kann die Standardabweichung in entsprechender Weise, wie es oberhalb unter Bezugnahme auf die Fig. 5 bis 7 erläutert wurde, zur Bestimmung einer Korrelation bzw. einer Fit-Funktion herangezogen werden.

Die vorliegende Erfindung ist nicht auf die, unter Bezugnahme auf die Figuren erläuterten Ausführungsbeispiele beschränkt. Insbesondere können auch alternative, statistische Auswertemöglichkeiten angewendet werden, um die zeitliche Fluktuation der Betragsamplitude des gefilterten analytischen Signals des Messsignals zu bestimmen. Ferner ist für die Ermittlung der Standardabweichung der Betragsamplitude des analytischen Signals des erfassten Messsignals nicht zwingend erforderlich, dass der jeweils komplexe Anteil Q(t), wie es oberhalb erläutert wurde (beispielsweise durch Anwenden der Hilbert-Transformation oder durch Einsatz eines Quadratur-Filters), ergänzt wird. Beispielsweise kann der Amplitudenbetrag zu den Zeiten, zu denen das jeweilige, insb. auf einen Frequenzbereich um die Vortexfrequenz, gefilterte Messsignal ein Maximum oder ein Minimum durchläuft, die Amplitude bestimmt werden. Diese Bestimmung kann beispielsweise mittels eines Peak-Detektors erfolgen. Ferner kann der Amplitudenbetrag auch durch Gleichrichtung des Messsignals mit einem nachgeschaltetem Tiefpassfilter bestimmt werden. Die Vortexfrequenz kann ferner über einen Nulldurchgangszähler, der jeweils Nulldurchgänge des gefilterten Messsignals erfasst, bestimmt werden. Daneben bestehen auch noch weitere, dem Fachmann geläufige Methoden zur Bestimmung der Amplitude sowie zur Bestimmung der Vortexfrequenz aus dem Messsignal.

## Patentansprüche

1. Verfahren zum Überwachen und/oder Messen eines in einer Rohrleitung strömenden, zumindest zeitweise zweiphasigen Mediums, das eine, insbesondere gasförmige, erste Phase mit einer ersten Dichte und eine zweite, insbesondere flüssige, Phase mit einer zweiten Dichte, von der ersten Dichte verschieden, aufweist, mittels eines in das strömende Medium hineinragenden Staukörpers (8) und eines, insbesondere stromab oder innerhalb des Staukörpers (8) platzierten, ersten Wirbelsensors (14), welches Verfahren folgende Schritte umfasst:

    - Erzeugen von Kärmän'schen Wirbeln im strömenden Medium zumindest im Bereich des Wirbelsensors (14) mittels des Staukörpers (8), wobei die Wirbel mit einer von einer momentanen Strömungsgeschwindigkeit des strömenden Mediums abhängigen Wirbelablösefrequenz ($\omega_v$) vom Staukörper (8) abgelöst werden;
    - Strömenlassen zumindest eines Teilvolumens der zweiten Phase des strömenden Mediums entlang einer Rohrwand im Bereich des Wirbelsensors (14);
    - Erfassen von durch die Kärmän'schen Wirbel im strömenden Medium verursachten periodischen Druckschwankungen mittels des Wirbelsensors (14) zum Erzeugen eines mit den Druckschwankungen korrespondierenden Messsignals;
    - Selektieren einer Nutzsignalkomponente aus dem Messsignal, die ein, insb. schmales, die Wirbelablösefrequenz ($\omega_v$) enthaltendes Frequenzband (V) aufweist, insb. mit einer relativen Bandbreite kleiner als 50% der momentanen Wirbelablösefrequenz, wobei die momentane Wirbelablösefrequenz der Mittenfrequenz der Frequenzbandbreite entspricht; und
    - Detektieren des Vorhandenseins der zweiten Phase des strömenden Mediums;

**dadurch gekennzeichnet, daß** das Detektieren des Vorhandenseins der zweiten Phase des strömenden Mediums unter Verwendung der vom Messsignal selektierten Nutzsignalkomponente basierend auf einer Kurtosis der Nutz-Signalkomponente, insb. auch basierend auf einer Standardabweichung eines Amplitudenverlaufs der Nutz-Signalkomponente, durchgeführt wird.

2. Verfahren gemäß einem der vorangehenden Ansprüche, **dadurch gekennzeichnet, dass** ein Messsignal, bei dem im Vergleich zu einer reinen Strömung der ersten Phase eines strömenden Mediums die Fluktuationen der Betragsamplitude des schmalbandig gefilterten analytischen Signals des erfassten Messsignals über die Zeit erhöht sind, charakteristische Merkmale für eine Wechselwirkung einer Wandströmung der zweiten, entlang einer Rohrwand des Messrohres (4) strömenden Phase eines Mediums mit dem sensitiven Abschnitt (16) des ersten Wirbelsensors (14) enthält.

3. Verfahren gemäß einem der vorangehenden Ansprüche, **dadurch gekennzeichnet, dass** ein Messsignal, bei dem im Vergleich zu einer reinen Strömung der ersten Phase eines strömenden Mediums die Standardabweichung der Betragsamplitude des schmalbandig gefilterten analytischen Signals des erfassten Messsignals erhöht ist, wobei die Standardabweichung über eine vorbestimmte Anzahl von Werten der Betragsamplitude, die über die Zeit erfasst wurden, gebildet wird, charakteristische Merkmale für eine Wechselwirkung einer Wandströmung der zweiten, entlang einer Rohrwand des Messrohres (4) strömenden Phase eines Mediums mit dem sensitiven Abschnitt (16) des ersten Wirbelsensors (14) enthält.

4. Verfahren gemäß einem der vorangehenden Ansprüche, **dadurch gekennzeichnet, dass** ein Messsignal, bei dem im Vergleich zu einer reinen Strömung der ersten Phase eines strömenden Mediums die Kurtosis des schmalbandig gefilterten Messsignals erhöht ist, wobei die Kurtosis über eine vorbestimmte Anzahl von Werten des Messsignals, die über die Zeit erfasst wurden, gebildet wird, charakteristische Merkmale für eine Wechselwirkung einer Wandströmung der zweiten, entlang einer Rohrwand des Messrohres (4) strömenden Phase eines Mediums mit dem sensitiven Abschnitt (16) des ersten Wirbelsensors (14) enthält.

5. Verfahren gemäß einem der vorangehenden Ansprüche, **dadurch gekennzeichnet, dass** für die Beurteilung, ob das Messsignal charakteristische Merkmale für eine Wechselwirkung einer Wandströmung der zweiten Phase, entlang einer Rohrwand des Messrohres (4) strömenden Mediums mit dem sensitiven Abschnitt (16) des ersten Wirbelsensors (14) enthält, das Messsignal zunächst auf einen Frequenzbereich um eine, durch das Wirbelströmungsmessgerät (2; 26) erfasste Vortexfrequenz herum gefiltert wird und das gefilterte Messsignal für die Beurteilung herangezogen wird, insbesondere dass dieser Frequenzbereich eine Breite von im Wesentlichen kleiner als 50% der Vortexfrequenz mit der Vortexfrequenz als Mittenfrequenz aufweist.

6. Verfahren gemäß einem der Ansprüche 3 bis 5, **dadurch gekennzeichnet, dass** unter Heranziehung einer Korrelation, in der im Rahmen einer Kalibrierung jeweils bekannte Massedurchflüsse einer Wandströmung einer vorbestimmten, zweiten Phase, Vortexfrequenzen, die für verschiedene Strömungsgeschwindigkeiten der ersten Phase eines strömenden Mediums durch das Wirbelströmungsmessgerät (2; 26) aus dem Messsignal bestimmt wurden, sowie jeweils die zugehörigen, durch das Wirbelströmungsmessgerät (2; 26) aus dem Messsignal bestimmten Standardabweichungen oder Kurtosis-Werte zueinander in Beziehung gesetzt sind, aus einer, durch das Wirbelströmungsmessgerät (2; 26) aus dem Messsignal bestimmten Vortexfrequenz und einer durch das Wirbelströmungsmessgerät (2; 26) aus dem Messsignal bestimmten Standardabweichung oder Kurtosis ein Massedurchfluss der vorbestimmten, zweiten Phase bestimmt wird.

7. Verfahren gemäß dem vorherigen Anspruch , **dadurch gekennzeichnet, dass** der bestimmte Massedurchfluss der zweiten Phase eines strömenden Mediums zur Korrektur einer Strömungsgeschwindigkeit oder eines Volumendurchflusses der ersten Phase des Mediums, die/der aus einer, durch das Wirbelströmungsmessgerät (2; 26) bestimmten Vortexfrequenz bestimmt wird, herangezogen wird.

8. Verfahren gemäß einem der Ansprüche 2 bis 7, **dadurch gekennzeichnet, dass** das erfasste Messsignal durch zwei parallele Filter (34, 36) auf einen schmalen, die Vortexfrequenz umfassenden Frequenzbereich, insb. mit der Vortexfrequenz als Mittenfrequenz, gefiltert wird, wobei ein Filter ein In-Phase Filter (36) und das andere Filter einen Quadratur-Filter (36) bildet, wobei die Filterkoeffizienten des Quadratrur-Filters derart gewählt sind, dass eine Phasenverschiebung des ausgegebenen gefilterten Quadratursignals um 90° gegenüber dem In-Phasen-Signal auftritt, um ein analytisches Signal mit momentaner Amplitude und Phase zu erhalten.

9. Verfahren gemäß einem der vorangehenden Ansprüche, **dadurch gekennzeichnet, dass** das Verfahren zur Detektion einer verteilten Teilchen- und/oder Tröpfchen-Strömung des mindestens einer zweiten oder mindestens einer dritten Phase eines Mediums nachfolgende Schritte aufweist:

   f) Erfassen von akustischen Signalen, die durch den Aufprall von Teilchen und/oder Tröpfchen der zweiten bzw. dritten Phase auf ein, insb. durch einen eine im Wesentlichen senkrecht zu der Strömungsrichtung (6) ausgerichtete, der Strömung zugewandte Prallfläche (27) aufweisenden Staukörper (8) gebildetes, Bauteil (8) des Wirbelströmungsmessgerätes (2), das in einen Strömungspfad innerhalb des Messrohres (4) ragt erzeugt werden, durch einen akustischen Wandler (31), der integral in dem Bauteil (8) ausgebildet ist oder akustisch an das Bauteil (8) angekoppelt ist; und
   g) Umwandeln der, durch den akustischen Wandler (31) erfassten akustischen Signale durch den akustischen Wandler (31) in elektrische Signale.

10. Wirbelströmungsmessgerät, zum Überwachen und/oder Messen eines in einer Rohrleitung strömenden, zumindest zeitweise zweiphasigen Mediums, das eine, insbesondere gasförmige, erste Phase mit einer ersten Dichte und eine zweite, insbesondere flüssige, Phase mit einer zweiten Dichte, von der ersten Dichte verschieden, aufweist, mittels eines in das strömende Medium hineinragenden Staukörpers und eines, insb. stromab oder innerhalb des Staukörpers platzierten, Wirbelsensors,

   - wobei sich der Staukörper (8) in dem Messrohr (4) quer zu einer Strömungsrichtung (6) derart erstreckt, dass für das jeweilige Medium beidseitig von dem Staukörper (8) jeweils ein Strömungspfad gebildet wird, und dass an dem Staukörper (8) beidseitig wenigstens zwei Abrisskanten (12) derart ausgebildet sind, dass sich an diesen im Einsatz Kármán'sche Wirbel ablösen, und
   - wobei der Wirbelsensor (14) in Bezug auf eine Einbaulage stromabwärts von den Abrisskanten (12) angeordnet ist und einen, auf auftretende Druckschwankungen ansprechenden, sensitiven Abschnitt (16) aufweist, wobei das Wirbelströmungsmessgerät derart ausgebildet ist, dass Druckschwankungen, die im Einsatz über den sensitiven Abschnitt (16) erfasst werden, in ein elektrisches Messsignal umgewandelt werden,

- wobei der sensitive Abschnitt (16) des Wirbelsensors (14) zumindest teilweise angrenzend an der Rohrwand des Messrohres (4) angeordnet ist, und

- wobei eine Elektronik des Wirbelströmungsmessgerätes, durch welche das elektrische Messsignal im Einsatz verarbeitet wird, ausgebildet ist, das Selektieren einer Nutzsignalkomponente und das Detektieren des Vorhandenseins der zweiten Phase gemäß den entsprechenden Schritten des Verfahrens gemäß einem der vorherigen Ansprüche auszuführen, wobei die Elektronik derart ausgebildet ist, dass bei Erfassen eines Messsignals, das charakteristische Merkmale für eine Wechselwirkung einer Wandströmung der zweiten, entlang einer Rohrwand des Messrohres (4) strömenden Phase des zwei- oder mehrphasigen Mediums mit dem sensitiven Abschnitt (16) des Wirbelsensors (14) enthält, auf die Existenz einer Wandströmung der zweiten Phase des zwei- oder mehrphasigen Mediums in dem Messrohr (4) geschlossen wird.

## Claims

1. Procedure for monitoring and/or measuring a medium, which is at least temporarily two-phase, and flows through a pipe, wherein said medium has a first phase, particularly gaseous, with a first density and a second phase, particularly liquid, with a second density that is different to the first density, using a bluff body (8) projecting into the flowing medium and a first vortex sensor (14) particularly located downstream or inside the bluff body (8), wherein said procedure comprises the following steps:

   - Generation of Karman vortices in the flowing medium at least in the area of the vortex sensor (14) using the bluff body (8), wherein the vortices are shed by the bluff body (8) at a vortex shedding frequency ($\omega_v$) that depends on a current flow velocity of the flowing medium;
   - At least a sub-volume of the second phase of the flowing medium is allowed to flow along a tube wall in the area of the vortex sensor (14);
   - Use of the vortex sensor (14) to record periodic pressure variations caused by the Karman vortices in the flowing medium, for the purpose of generating a measuring signal corresponding to the pressure variations;
   - Selection, from the measuring signal, of a useful signal component that has a, particularly narrow, frequency band (V) containing the vortex shedding frequency ($\omega_v$), particularly with a relative bandwidth that is less than 50% of the current vortex shedding frequency, wherein the current vortex shedding frequency corresponds to the center frequency of the frequency bandwidth; and
   - Detection of the presence of the second phase of the flowing medium;

   **characterized in that** the presence of the second phase of the flowing medium is detected using the useful signal component selected from the measuring signal on the basis of a kurtosis of the useful signal component, particularly also on the basis of a standard deviation of an amplitude curve of the useful signal component.

2. Procedure as claimed in one of the previous claims, **characterized in that** a measuring signal - where the fluctuations of the amplitude value of the narrowband filtered analytical signal of the recorded measuring signal are high over time compared to a pure flow of the first phase of a flowing medium - contains characteristic attributes for an interaction of a wall flow of the second phase of a medium flowing along a wall of the measuring tube (4) with the sensitive section (16) of the first vortex sensor (14).

3. Procedure as claimed in one of the previous claims, **characterized in that** a measuring signal - where the standard deviation of the amplitude value of the narrow-band filtered analytical signal of the recorded measuring signal is high compared to a pure flow of the first phase of a flowing medium, the standard deviation being formed over a predefined number of amplitude values that were recorded over time - contains characteristic attributes for an interaction of a wall flow of the second phase of a medium flowing along a wall of the measuring tube (4) with the sensitive section (16) of the first vortex sensor (14).

4. Procedure as claimed in one of the previous claims, **characterized in that** a measuring signal - where the kurtosis of the narrow-band filtered measuring signal is high compared to a pure flow of the first phase of a flowing medium, wherein the kurtosis is formed over a predefined number of values of the measuring signal that have been captured over time - contains characteristic attributes for an interaction of a wall flow of the second phase of a medium flowing along a wall of the measuring tube (4) with the sensitive section (16) of the first vortex sensor (14).

5. Procedure as claimed in one of the previous claims, **characterized in that**, in order to assess whether the measuring signal contains characteristic attributes for an interaction of a wall flow of the second phase of the medium flowing along the wall of the measuring tube (4) with the sensitive section (16) of the first vortex sensor (14), the measuring signal is initially filtered to a frequency range around a vortex frequency determined by the vortex flowmeter (2; 26) and the filtered measuring signal is used to assess particularly if this frequency range has a width that is essentially less than 50 % of the vortex frequency with the vortex frequency as the center frequency.

6. Procedure as claimed in one of the Claims 3 to 5, **characterized in that** - using a correlation whereby, during a calibration, known mass flows of a wall flow of a predefined second phase; vortex frequencies determined from the measuring signal for different flow velocities of the first phase of a medium flowing through the vortex flowmeter (2; 26); and standard deviations or corresponding kurtosis values, determined by the vortex flowmeter (2; 26) from the measuring signal, are put in relation to one another - a mass flow of the predefined second phase is determined from a vortex frequency determined by the vortex flowmeter (2; 26) from the measuring signal and a standard deviation or a kurtosis determined by the vortex flowmeter (2; 26) from the measuring signal.

7. Procedure as claimed in the previous claim, **characterized in that** the determined mass flow of the second phase of a flowing medium is used to correct a flow velocity or a volume flow of the first phase of the medium, wherein said speed or said flow is determined from a vortex frequency determined by the vortex flowmeter (2; 26).

8. Procedure as claimed in one of the Claims 2 to 7, **characterized in that** - for the purpose of obtaining an analytical signal with a current amplitude and phase - the recorded measuring signal is filtered by two parallel filters (34, 36) to a narrow frequency range comprising the vortex frequency, particularly with the vortex frequency as the center frequency, wherein one of the filters forms an in-phase filter (36) and the other filter forms a quadrature filter (36), wherein the filter coefficients of the quadrature filter are selected in such a way that a 90° phase shift of the output filtered quadrature signal occurs in relation to a phase signal.

9. Procedure as claimed in one of the previous claims, **characterized in that** the procedure for the detection of a distributed particle flow and/or droplet flow of the at least one second or at least one third phase of a medium comprises the following steps:

f) Recording of acoustic signals that are generated by the impact of particles and/or droplets of the second or the third phase against a component (8) of the vortex flowmeter (2) - formed particularly by a bluff body (8) that has an impact surface (27) that is essentially oriented to be perpendicular to the direction of flow (6) and faces towards the flow, wherein said component (8) projects into a flow path inside the measuring tube (4) - using an acoustic transducer (31) which is formed integrally in the component (8) or which is coupled acoustically to the component (8); and
g) Conversion of the acoustic signals recorded by the acoustic transducer (31) to electric signals by means of the acoustic transducer (31).

10. Vortex flowmeter for monitoring and/or measuring a medium, which is at least temporarily two-phase, flowing through a pipe, wherein said medium has a first phase, particularly gaseous, with a first density and a second phase, particularly liquid, with a second density that is different to the first density, by means of a bluff body projecting into the flowing medium and a vortex sensor, particularly located downstream or inside the bluff body,

- wherein the bluff body (8) extends in the measuring tube (4) perpendicularly to a direction of flow (6) in such a way that a flow path is formed for the medium on both sides of the bluff body (8), and that at least two detach edges (12) are formed at the bluff body (8) on both sides in such a way that Karman vortices are shed at these edges during use, and
- wherein the vortex sensor (14) is arranged downstream from the detach edges (12) in relation to an installation position, and has a sensitive section (16) that reacts to pressure variations that occur, wherein the vortex flowmeter is designed in such a way that the pressure variations that are measured during use via the sensitive section (16) are converted to an electrical measuring signal,
- wherein the sensitive section (16) of the vortex sensor (14) is arranged at least partially in a manner that it is adjacent to the wall of the measuring tube (4), and
- wherein an electronics unit of the vortex flowmeter - by means of which the electrical measuring signal is processed during use - is designed to perform the selection of a useful signal component and the detection of the presence of the second phase as per the corresponding procedural steps as claimed in one of the previous claims, wherein the electronics unit is designed in such a way that when a measuring signal is recorded that contains characteristic attributes for an interaction of a wall flow of the second phase of the two-phase or multi-phase medium, flowing along a wall of the measuring tube (4), with the sensitive section (16) of the vortex sensor (14), one concludes the existence of a wall flow of the second phase of the two-phase or multi-phase medium in the measuring tube (4).

## Revendications

1. Procédé destiné à la surveillance et/ou à la mesure d'un produit à deux phases s'écoulant au moins temporairement dans une conduite, lequel produit présente une première phase, notamment gazeuse, avec une première densité et une deuxième phase, notamment liquide, avec une deuxième densité, différente de la première densité, au moyen d'un corps de retenue (8) pénétrant dans le produit en écoulement et d'un premier capteur vortex (14) disposé notamment en aval ou à l'intérieur du corps de retenue (8), lequel procédé comprend les étapes suivantes :

    - Génération de tourbillons de Kármán dans le produit en écoulement au moins dans la zone du capteur vortex (14) au moyen du corps de retenue (8), les tourbillons étant détachés du corps de retenue (8) avec une fréquence de détachement des tourbillons ($\omega_v$) qui dépend d'une vitesse d'écoulement momentanée du produit en écoulement ;
    - Mise en écoulement au moins d'un volume partiel de la deuxième phase du produit en écoulement le long d'une paroi de tube dans la zone du capteur vortex (14) ;
    - Acquisition, au moyen du capteur vortex (14), de variations de pression périodiques provoquées par les tourbillons de Kármán dans le produit en écoulement, afin de générer un signal de mesure correspondant aux variations de pression ;
    - Sélection, à partir du signal de mesure, d'une composante de signal utile qui présente une bande de fréquence (V), notamment étroite, contenant la fréquence de détachement des tourbillons ($\omega_v$), notamment avec une largeur de bande relative inférieure à 50 % de la fréquence de détachement momentanée des tourbillons, la fréquence de détachement momentanée des tourbillons correspondant à la fréquence centrale de la largeur de bande de fréquence ; et
    - Détection de la présence de la deuxième phase du produit en écoulement ;

    **caractérisé en ce que** la détection de la présence de la deuxième phase du produit en écoulement est effectuée en utilisant la composante de signal utile sélectionnée à partir du signal de mesure sur la base d'un aplatissement de la composante de signal utile, notamment également sur la base d'un écart-type d'une courbe d'amplitude de la composante de signal utile.

2. Procédé selon l'une des revendications précédentes, **caractérisé en ce qu'**un signal de mesure - pour lequel les fluctuations de l'amplitude de la valeur absolue du signal analytique filtré à bande étroite du signal de mesure acquis sont augmentées dans le temps par rapport à un écoulement pur de la première phase d'un produit en écoulement - contient des attributs caractéristiques pour une interaction d'un écoulement de paroi de la deuxième phase d'un produit s'écoulant le long d'une paroi du tube de mesure (4) avec la section sensible (16) du premier capteur vortex (14).

3. Procédé selon l'une des revendications précédentes, **caractérisé en ce qu'**un signal de mesure - pour lequel, par rapport à un écoulement pur de la première phase d'un produit en écoulement, l'écart-type de l'amplitude de la valeur absolue du signal analytique filtré à bande étroite du signal de mesure acquis est augmenté, l'écart-type étant formé sur un nombre prédéfini de valeurs de l'amplitude de la valeur absolue qui ont été acquises dans le temps - contient des attributs caractéristiques pour une interaction d'un écoulement de paroi de la deuxième phase d'un produit s'écoulant le long d'une paroi du tube de mesure (4) avec la section sensible (16) du premier capteur vortex (14).

4. Procédé selon l'une des revendications précédentes, **caractérisé en ce qu'**un signal de mesure - pour lequel l'aplatissement du signal de mesure filtré à bande étroite est augmenté par rapport à un écoulement pur de la première phase d'un produit en écoulement, l'aplatissement étant calculé sur un nombre prédéfini de valeurs du signal de mesure, qui ont été saisies dans le temps - contient des caractéristiques pour une interaction d'un écoulement de paroi de la deuxième phase d'un produit s'écoulant le long d'une paroi du tube de mesure (4) avec la section sensible (16) du premier capteur vortex (14).

5. Procédé selon l'une des revendications précédentes, **caractérisé en ce que**, pour évaluer si le signal de mesure contient des attributs caractéristiques d'une interaction d'un écoulement de paroi de la deuxième phase du produit s'écoulant le long d'une paroi du tube de mesure (4) avec la section sensible (16) du premier capteur vortex (14), le signal de mesure est d'abord limité à une gamme de fréquences autour d'une valeur de référence déterminée par le débitmètre vortex (2 ; 26) et que le signal de mesure filtré est utilisé pour l'évaluer, notamment si cette gamme de fréquences présente une largeur pour l'essentiel inférieur à 50 % de la fréquence vortex avec la fréquence vortex comme fréquence centrale.

6. Procédé selon l'une des revendications 3 à 5, **caractérisé en ce que**, en utilisant une corrélation dans laquelle, dans le cadre d'un étalonnage, des débits massiques respectivement connus d'un écoulement de paroi d'une deuxième phase prédéfinie, des fréquences vortex qui sont déterminées pour différentes vitesses d'écoulement de la première phase d'un produit en écoulement par le débitmètre vortex (2 ; 26) à partir du signal de mesure, ainsi que les écarts-types ou les valeurs d'aplatissement correspondants, déterminés par le débitmètre vortex (2 ; 26) à partir du signal de mesure, sont mis en relation les uns avec les autres, un débit massique de la deuxième phase prédéfinie est déterminé à partir d'une fréquence vortex déterminée par le débitmètre vortex (2 ; 26) à partir du signal de mesure et d'un écart-type ou d'un aplatissement déterminé par le débitmètre vortex (2 ; 26) à partir du signal de mesure.

7. Procédé selon la revendication précédente, **caractérisé en ce que** le débit massique déterminé de la deuxième phase d'un produit en écoulement est utilisé pour corriger une vitesse d'écoulement ou un débit volumique de la première phase du produit, laquelle vitesse ou lequel débit est déterminé à partir d'une fréquence vortex déterminée par le débitmètre vortex (2 ; 26).

8. Procédé selon l'une des revendications 2 à 7, **caractérisé en ce que** le signal de mesure acquis est filtré par deux filtres parallèles (34, 36) sur une gamme de fréquences étroite comprenant la fréquence vortex, notamment avec la fréquence vortex comme fréquence centrale, l'un des filtres formant un filtre en phase (36) et l'autre filtre formant un filtre en quadrature (36), les coefficients de filtrage du filtre en quadrature étant choisis de telle sorte qu'apparaisse un déphasage de 90° du signal en quadrature filtré délivré par rapport au signal en phase, afin d'obtenir un signal analytique d'amplitude et de phase momentanées.

9. Procédé selon l'une des revendications précédentes, **caractérisé en ce que** le procédé de détection d'un écoulement de particules et/ou de gouttelettes réparties dans au moins une deuxième ou au moins une troisième phase d'un produit comprend les étapes suivantes :

   f) Acquisition de signaux acoustiques, qui sont générés par l'impact de particules et/ou de gouttelettes de la deuxième ou de la troisième phase sur un corps de retenue (8) formé notamment par une surface d'impact (27) orientée pour l'essentiel perpendiculairement à la direction d'écoulement (6) et tournée vers l'écoulement, (8) du débitmètre vortex (2), lequel corps de retenue fait saillie dans un chemin d'écoulement à l'intérieur du tube de mesure (4), par l'intermédiaire d'un transducteur acoustique (31) qui est formé intégralement dans le corps de retenue (8) ou qui est couplé acoustiquement au corps de retenue (8) ; et

   g) Conversion des signaux acoustiques mesurés par le transducteur acoustique (31) en signaux électriques par l'intermédiaire du transducteur acoustique (31).

10. Débitmètre vortex destiné à la surveillance et/ou à la mesure d'un produit à deux phases s'écoulant au moins temporairement dans une conduite, lequel produit présente une première phase, notamment gazeuse, avec une première densité et une deuxième phase, notamment liquide, avec une deuxième densité, différente de la première densité, au moyen d'un corps de retenue pénétrant dans le produit en écoulement et d'un capteur vortex, notamment disposé en aval ou à l'intérieur du corps de retenue,

   - le corps de retenue (8) s'étendant dans le tube de mesure (4) perpendiculairement à une direction d'écoulement (6) de telle sorte qu'un chemin d'écoulement est formé pour le produit respectif des deux côtés du corps de retenue (8), et qu'au moins deux arêtes de détachement (12) sont formées des deux côtés du corps de retenue (8) de telle sorte que des tourbillons de Kármán se détachent sur celles-ci pendant l'utilisation, et
   - le capteur vortex (14) étant disposé, par rapport à une position de montage, en aval des arêtes de détachement (12) et présentant une section sensible (16) réagissant aux variations de pression qui se produisent, le débitmètre vortex étant conçu de telle sorte que les variations de pression qui sont mesurées en cours d'utilisation par l'intermédiaire de la section sensible (16) sont converties en un signal de mesure électrique,
   - la section sensible (16) du capteur vortex (14) étant disposée au moins partiellement de manière adjacente à la paroi du tube de mesure (4), et
   - une électronique du débitmètre vortex, par laquelle le signal électrique de mesure est traité pendant l'utilisation, est conçue pour effectuer la sélection d'une composante de signal utile et la détection de la présence de la deuxième phase selon les étapes correspondantes du procédé selon l'une des revendications précédentes, l'électronique étant conçue de telle sorte que, lors de l'acquisition d'un signal de mesure contenant des attributs caractéristiques d'une interaction d'un écoulement de paroi de la deuxième phase du produit à deux phases ou à plusieurs phases s'écoulant le long d'une paroi du tube de mesure (4) avec la partie sensible (16) du capteur vortex (14), on conclut à l'existence d'un écoulement de paroi de la deuxième phase du produit à deux phases ou à plusieurs phases dans le tube de mesure (4).

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060217899 A1
- WO 03102511 A
- EP 0229933 A1